# EUROPEAN PATENT APPLICATION

(11) **EP 1 422 732 A1**
(43) Date of publication of application: **26.05.2004**
(21) Application number: 02755795.8
(22) Date of filing: 02.08.2002
(51) Int. Cl.: H01G 9/04, H01G 9/00

(54) **PROCESS FOR PRODUCING ALUMINUM MATERIAL FOR ELECTRODE OF ELECTROLYTIC CAPACITOR, ALUMINUM MATERIAL FOR ELECTRODE OF ELECTROLYTIC CAPACITOR, AND METHOD FOR PRODUCING ELECTRODE MATERIAL FOR ELECTROLYTIC CAPACITOR**

(30) Priority: 03.08.2001 JP 2001235940; 17.08.2001 US 312753 P; 25.04.2002 JP 2002123666; 05.07.2002 JP 2002196867; 18.07.2002 JP 2002209455; 18.07.2002 JP 2002209459
(71) Applicant: SHOWA DENKO K.K., Tokyo 105-8518 (JP)
(72) Inventor: NISHIMORI, Hideki, Sakai Regional Office, Sakai-shi, Osaka 590-0982 (JP); YAMAGUCHI, Tomofumi, Sakai Regional Office, Sakai-shi, Osaka 590-0982 (JP); KATO, Yutaka, Sakai Regional Office, Sakai-shi, Osaka 590-0982 (JP); SAKAGUCHI, Masashi, Sakai Regional Office, Sakai-shi, Osaka5 90-0982 (JP); KODAMA, Kazuhiro, Sakai Regional Office, Sakai-shi, Osaka 590-0982 (JP); HODZUMI, Satoshi, Sakai Regional Office, Sakai-shi, Osaka 590-0982 (JP)
(74) Representative: Viering, Jentschura & Partner
(86) International application number: PCT/JP2002/007928
(87) International publication number: WO 2003/015112

(57) **Abstract**

In manufacturing an aluminum material for electrolytic capacitor electrodes by sequentially subjecting an aluminum slab to hot rolling, cold rolling and final annealing, a contact heating step for heating the aluminum material is performed by bringing the aluminum material into contact with a heating body after the hot rolling. The contact heating step for bringing the aluminum material into contact with the heating body can be performed at anytime after the hot rolling. The contact heating can be performed at least one time between a start of the cold rolling and a completion thereof, or after the cold rolling but before the final annealing, or after the final annealing.

## Description

Priority is claimed to Japanese Patent Application No. 2001-235940, filed on August 3, 2001, Japanese Patent Application No. 2002-123666, filed on April 25, 2002, Japanese Patent Application No. 2002-196867, filed on July 5, 2002, Japanese Patent Application No. 2002-209455, filed on July 18, 2002, Japanese Patent Application No. 2002-209459, filed on July 18, 2002, and U.S. Provisional Application No.60/312,753, filed on August 17, 2001, the disclosure of which are incorporated by reference in their entireties.

### Cross Reference to Related Applications

This application is an application filed under 35 U.S.C. § 111(a) claiming the benefit pursuant to 35 U.S.C. § 119(e)(1) of the filing date of Provisional Application No.60/312,753 filed on August 17, 2001 pursuant to 35 U.S.C. § 111(b).

### Technical Field

The present invention relates to a method for manufacturing an aluminum material for electrolytic capacitors, an aluminum material for electrolytic capacitor electrodes, a method for manufacturing an electrode material for electrolytic capacitors, and an aluminum electrolytic capacitor.

In this specification, the wording of "aluminum" is used within the meaning including its aluminum alloy, and the wording of "aluminum material" is used within the meaning including a foil, a plate and a formed article using the same.

### Background Art

Since an aluminum material generally used as an electrode material for aluminum electrolytic capacitors is required to have a larger surface area and a larger capacitance per unit area, such aluminum material is subjected to electrochemical or chemical etching to thereby enlarge the effective area thereof.

Furthermore, in order to increase the effective area thereof, various aspects of studies such as material compositions, manufacturing steps and etching methods have been conducted with respect to increasing the number of etching pits and enlarging each etching pit.

For example, in a method of manufacturing an aluminum material for electrolytic capacitors in which tunnel-like pits are formed by a direct-current electrolysis etching method, final annealing is generally performed in an inert atmosphere or in a vacuum at about 500 °C to generate (100) face crystal orientation. The final annealing denotes a step to be carried out after finish cold rolling or after finish cold rolling and washing.

Some documents disclose that when crystalline oxide particles are generated on a surface of an aluminum material at the time of final annealing etch pits grow at around crystals at the time of electrolytic etching (e.g., The 95th Autumn Conference of Japan Institute of Light Metals Lecture Summary, page 265 (1998), Kiyoshi FUKUOKA, Nobuo OSAWA, Tetsuya MOTOI; Journal of The Surface Finishing Society of Japan 50[7] page 643 (1999), Nobuo OSAWA, Kiyoshi FUKUOKA). It is believed that the generation of crystalline oxide grains on the surface of the aluminum material contributes to enhancement of capacitance.

As mentioned above, however, in an inert atmosphere or in a vacuum atmosphere which is a common atmosphere for final annealing, since the oxygen amount in such atmosphere is extremely small, final annealing hardly causes crystallization. To the contrary, when high temperature annealing is performed in an oxidation atmosphere, the oxide layer becomes thicker, resulting in deteriorated uniformity of etch pits.

As a method for yielding a larger amount of crystals on a surface of an aluminum material, Japanese Examined Laid-open Patent Publication No. S58-34926 discloses formation of hydration treated film by, for example, a method in which steam or damp air is blown against a surface of an aluminum material before final annealing, a method in which an aluminum material is heated in an atmosphere at about 200 °C, or the so-called Boehmite treatment method in which an aluminum material is immersed in heated water or amine aqueous solution.

Although a hydration treated film enhances the precipitation of crystalline oxide on a surface of an aluminum material by the subsequent final annealing, the hydration treated film contains a large amount of Al-OH group on the surface, which may cause adhesion of aluminum materials when batch annealing is performed in a state in which an aluminum material is coiled or aluminum plates are piled. Furthermore, in the method of heating an aluminum material in an atmosphere at about 200 °C, a precise atmospheric control such as a vapor amount control is required to obtain a reproducible intended oxide film. Therefore, there is a disadvantage that it takes a time for the surface of the aluminum foil to reach the predetermined temperature.

Furthermore, Japanese Unexamined Laid-open Patent Publication No. S63-116417 discloses the technique for yielding γ-Al₂O₃ by continuous final annealing in an oxidizing atmosphere containing oxygen and/or moisture. However, since the final annealing time is short, the yielding of γ-Al₂O₃ may become insufficient.

Furthermore, Japanese Unexamined Laid-open Patent Publication No. H7-201673 discloses a method of manufacturing an aluminum material for electrolytic capacitor electrodes for obtaining high capacitance with improved etching characteristics. This method includes a step of eliminating a surface layer of an aluminum foil, a step of heating and oxidizing the aluminum foil from which the surface layer is eliminated in the above step under the conditions of temperature: 40 to 350 °C, dew point: 0 to 80 °C, and time: 30 to 1,800 seconds, and then a step of annealing the aluminum foil in a non-oxidizing atmosphere after the heating and oxidizing at the above step.

Furthermore, Japanese Unexamined Laid-open Patent Publication No. H5-279815 discloses a method of manufacturing an aluminum foil for electrolytic capacitor positive electrodes characterized in that a thickness of a barrier-type oxide film on the aluminum foil surface is controlled to be 2.5 angstrom or less at the washing treatment before the final annealing, and the aluminum foil is heat-treated in an oxidizing atmosphere at 150 to 400 °C after the washing treatment but before the finish annealing treatment to thereby grow the thickness of the barrier-type oxidizing film on the aluminum foil surface to 10 angstrom or less. It also describes that the preferable time for the heat-treatment is 5 minutes to 3 hours.

In the aforementioned methods disclosed in Japanese Unexamined Laid-open Patent Publication No. H7-201673 and Japanese Unexamined Laid-open Patent Publication No. H5-279815, a stable surface oxide film of the aluminum material can be obtained because the heating is performed after the washing. However, since the heating method is an atmospheric heating method, the oxide film to be generated by the heating is easily affected by the influence of the atmosphere, and therefore it takes a time for the heat treatment.

Furthermore, Japanese Unexamined Laid-open Patent Publication No. H5-200406 discloses that surface layer eliminating washing is performed before the finish rolling and a continuous low temperature heating is performed before the final annealing, to thereby increase the capacitance and eliminate the difference of capacitance in the width direction of the aluminum material coil.

However, in the method of Japanese Unexamined Laid-open Patent Publication No. H5-200406, since the atmospheric heating is performed before the final annealing, the oxide film of the aluminum surface layer becomes stable. However, there are disadvantages that a precise atmospheric control such as a vapor amount control is required to obtain a reproducible intended oxide film and it takes a time for the surface of the aluminum foil to reach the predetermined temperature.

Furthermore, Japanese Unexamined Laid-open Patent Publication No. H11-36053 discloses a method for increasing capacitance in which an aluminum material is heated in an atmosphere, in a vacuum or in an inert atmosphere after final annealing to generate defects which become origins of pits on the surface of the aluminum material to thereby prevent the dissolution of the surface other than the above portions. Also, Japanese Unexamined Laid-open Patent Publication No. H5-255821 discloses that an aluminum foil after final annealing (finish annealing) is washed with alkaline aqueous solution and then heated in an atmosphere at 150 to 400 °C to thereby increase the capacitance and eliminate uneven capacitance.

However, since the aforementioned conventional heat treatment after the final annealing is performed in an atmosphere, in vacuum or in inert gas, it is easily affected by the influences of oxygen and/or vapor, a precise atmospheric control such as a vapor amount control is required to obtain a reproducible intended oxide film. Therefore, there is a disadvantage that it takes a time for the surface of the aluminum foil to reach the predetermined temperature.

An object of the present invention is to provide an aluminum material for electrolytic capacitor electrodes capable of obtaining uniform etching characteristics and an enhanced surface increasing ratio by etching by short time treatment without requiring a precise atmospheric control and a method of manufacturing such aluminum material.

Another object of the present invention is to provide a method of manufacturing an electrolytic capacitor electrode material and an aluminum electrolytic capacitor using the aforementioned aluminum material.

### Disclosure of Invention

According to the present invention, a method of manufacturing an aluminum material for electrolytic capacitor electrodes is characterized in that, in manufacturing an aluminum material for electrolytic capacitor electrodes by subjecting an aluminum slab to hot rolling, cold rolling and final annealing, a step for heating the aluminum material by bringing into contact with a heating body is performed after the hot rolling.

The contact heating step of the aluminum material by bringing into contact with the heating body can be performed at any time provided that the contact heating step is performed after the hot rolling. Concretely, the contact heating step can be performed at least one time between the start of the cold rolling and the completion thereof.

Alternatively, the contact heating step of the aluminum material for bringing into contact with the heating body can be performed after the cold rolling, but before or after the final annealing.

The reasons for employing the contact heating as a heating method are that the heating control can be relatively easily performed because the surface temperature of the aluminum material can be reached a prescribed temperature uniformly and immediately and that the influence of the atmosphere can be minimized because the heating can be performed quickly and immediately.

Other objects and advantages of the present invention will be apparent from the following preferred embodiments.

### Best Mode for Carrying Out the Invention

### (First embodiment)

In this embodiment, the contact heating step for heating the aluminum material by bringing into contact with the heating body is performed at least one time at an intermediate step between the initiation of the cold rolling and the termination thereof.

That is, the inventors of the application revealed that heating the aluminum material by bringing it into contact with a heating body at least one time at an intermediate step between the initiation of cold rolling (including finish cold rolling) and the termination thereof to form close and uniform aluminum surface oxide film yields an aluminum material for electrolytic capacitor electrodes with uniform etching characteristics and high capacitance after the final annealing.

The reasons for employing the contact heating as a heating method are that the heating control can be performed relatively easily because the surface temperature of the aluminum material can be reached a prescribed temperature uniformly in a short time and that the atmospheric influence can be minimized because the heating can be performed in a short time.

The aluminum material heated by at least one time contact with the heating body during the cold rolling step is subjected to cold rolling, then washing if necessary, and thereafter final annealing.

Some documents disclose that, in cases where crystalline oxide particles are formed on the aluminum surface at the time of final annealing, etch pits will generate around crystals at the time of electrolytic etching (see, e.g., Journal of The Surface Finishing Society of Japan 50[7], p643 (1999), Nobuo OSAWA, Kiyoshi FUKUOKA). It is considered that yielding crystalline oxide particles on the aluminum surface contributes to increasing of capacitance.

In the aluminum material having a surface oxide film formed closely and uniformly by the contact heating, the subsequent cold rolling causes uniformly distributed defects on the entire surface of the aluminum material. When the cold rolled aluminum material is subjected to final annealing as it is or after washing with washing solution not capable of melting aluminum, an aluminum material for electrolytic capacitor electrodes in which substances such as fine crystalline oxides that will become nuclei of etch pits are uniformly dispersed on the surface of the aluminum material can be obtained.

The substances that can be nuclei of etch pits are not limited to crystalline oxides, but can be high density or thick non-crystalline substances or substances containing crystalline oxides or metal aluminum within noncrystalline. Examples of crystalline oxides include Al₂O₃ such as γ-Al₂O₃, AlOOH such as boehmite, and composite oxides included metal ingredients (such as Mg, Pb, Cu) other than aluminum. However, the crystalline oxides are not limited to metal oxides or metal hydroxides.

It is believed that substances different in property from another portion yielded in the oxide film of the aluminum material surface will become nuclei of etch pits at the time of etching. It is presumed that the quick heating of the aluminum material before the final annealing yields substances containing crystals, amorphous in the state before being transited to a crystal or a substance containing crystals or metal aluminum in amorphous and that these substances will become the nuclei of etch pits.

In cases where the aluminum material is subjected to washing with washing liquid which causes melting of aluminum before the final annealing, the oxides yielded on the surface of the aluminum material by the contact heating will be eliminated. However, the surface layer can be uniformly melted with the washing liquid as compared with the case in which no contact heating is performed, resulting in an aluminum material with uniformly distributed substances which will become nuclei of etch pits after the final annealing.

Furthermore, in this embodiment, in cases where intermediate annealing is performed during the cold rolling steps for the purpose of eliminating the crystal structure distortion of the aluminum alloy caused by the precedent rolling step, the contact heating of the aluminum alloy is performed before the intermediate annealing to obtain fine and uniform surface oxide film of the aluminum material. This prevents the growing of the oxide film at the time of the intermediate annealing, which in turn results in an aluminum surface oxide film homogeneous in the widthwise and longitudinal directions of the coiled aluminum material.

Hereinafter, a method of manufacturing an aluminum material for electrolytic capacitors will be explained.

The purity of the aluminum material is not specifically limited as long as it falls within a range capable of being used for electrolytic capacitors. The preferable purity is 99.9% or above, more preferably 99.95% or above. In the present invention, the purity of the aluminum material is defied by a value obtained by subtracting the total concentration (%) of Fe, Si, Cu, Mn, Cr, Zn, Ti and Ga from 100%.

Although the method of manufacturing the aluminum material is not limited, a melted component adjustment of aluminum materials slab casting, homogenization heat treatment, hot rolling, cold rolling including finish cold rolling (low reduction rolling) and final annealing will be performed in this order. At an intermediate step of the cold rolling between the initiation of the cold rolling and the termination thereof, the aluminum material is heated by bringing it into contact with a heating body at least one time. For example, the contact heating is performed during the primary cold rolling before the finish cold rolling ,or between the primary cold rolling and the finish cold rolling. The manufacturing step conditions of the aluminum material may be changed in accordance with the etching conditions of the aluminum material.

For the purpose of eliminating the distortion of the crystal structure of the aluminum material caused by the primary rolling, an intermediate annealing may be performed during the cold rolling steps. Furthermore, for the purpose of eliminating impurities and/or oils on the surface of the aluminum material, washing can be performed at a step before the intermediate annealing or a step after the cold rolling but before the final annealing.

The aforementioned contact heating of the aluminum material is performed to obtain an aluminum material for electrolytic capacitor electrodes with uniform etching characteristics and high capacitance after the final annealing by forming a fine and homogeneous surface oxide film of the aluminum material.

However, if the rolling reduction ratio after the contact heating is too large, the effect of equalizing etching characteristic by the contact heating deteriorates. Accordingly, the rolling reduction ratio after the contact heating is preferably 60% or less, more preferably 30% or less, wherein the rolling reduction ratio is defined by [(A-B)/A]×100%, where "A "(µm) is the thickness of the aluminum material after the last contact heating but before the resumption of cold rolling, and "B"(µm) is the thickness of the aluminum material after the termination of the entire cold rolling.

The means for the contact heating can be any means capable of attaining the contact heating such as a heated roll, a heated belt or a heated plate to heat one side or both sides of the aluminum material. The heating surface material of the heating body can be an arbitrarily selected material such as stainless, plating, ceramic, Teflon (registered trademark) resin, and silicone resin. However, it is preferable to select a material which does not cause adhesion of the surface oxide film to the surface of the heating body.

The surface temperature of the heating body which comes into contact with an aluminum material is preferably 50 to 450 °C. If the surface temperature is below 50 °C, the heating becomes insufficient, which may result in insufficient generation of substances which will become nuclei of etch pits such as crystalline oxide particles at the time of final annealing. To the contrary, if the surface temperature exceeds 450°C, the oxide film becomes too thick, causing winkles at the time of cooling, which may cause operational problems. More preferably, the surface temperature of the heating body is 60 to 400°C, still more preferably 100 to 350°C. The optimal surface temperature of the heating body is 160 to 290°C.

The preferable contact time of the surface of the aluminum material and the surface of the heating body is 0.001 to 60 seconds. If the contact time is less than 0.001 second, heating the surface of the aluminum material becomes insufficient, which may cause uneven generation of substances which will become etch pits. To the contrary, even if the heating is performed 60 seconds or more, the homogenization effects of the oxide film may be saturated. It is more preferable that the contact time is 0.01 to 30 seconds. It is still more preferable that the contact time is 0.1 to 10 seconds.

The surface temperature of the heating body and the contact time can be determined arbitrarily considering the characteristics of the surface oxide film of the aluminum material before the contact heating. The contact heating atmosphere is not specifically limited, and the contact heating can be performed in the air without performing specific atmospheric control.

As an example of a heating apparatus using a heating roll as the heating body, a device provided with at least two heating rolls for performing the contact heating of the front and rear surfaces of the aluminum material can be exemplified. In cases where the aluminum material after the contact heating with heating rolls wrinkles at the time of rolling the aluminum material, the aluminum material can be rolled up after cooling the aluminum material by passing through one or a plurality of cooling bodies such as cooling rolls after the heating with heating rolls or the like. Especially, in cases where cooling rolls are used as cooling bodies, the cooling can be performed easily and continuously. Furthermore, before heating the aluminum material with heating rolls to the targeted contact heating temperature, the aluminum material can be pre-heated to a temperature lower than the targeted contact heating temperature by using other heating rolls.

The liquid for washing the aluminum material before an intermediate annealing, or after the cold rolling but before the final annealing, is not limited to a specific one, but can be organic solvent, alkaline aqueous solution, acid aqueous solution, amine aqueous solution, aqueous ammonia, or water containing surfactant.

As the aforementioned organic solvent, alcohol, diol, aromatic hydrocarbon such as toluene · xylene, alkane series hydrocarbon, cyclohexane, ketone, ether, ester and petrochemical products can be exemplified. However, the organic solvent is not limited to the above. Furthermore, a plurality of organic solvent can be mixed. In the case of organic solvent capable of being mixed with water, such organic solvent can be mixed with water as occasion demands.

As washing liquid for washing the aluminum material before an intermediate annealing, or after the cold rolling but before the final annealing, alkaline aqueous solution or acid aqueous solution can be used. Although alkaline contained in the alkali aqueous solution is not limited to a specific one, sodium hydroxide, potassium hydroxide, calcium hydroxide and sodium silicate can be exemplified. Aqueous solution containing at least one of the aforementioned acids can be used as washing liquid.

The method of contacting the aluminum material with washing liquid in the aforementioned washing is not limited to a specific method. As such a method, immersing, contacting the aluminum material with the surface of the washing liquid and spraying can be exemplified.

After the final cold rolling, and further washing if necessary, for the primary purpose of the encourage of the production of substances which will become nuclei of etch pits and the enhancement of the etching characteristics by arranging the crystal orientation of the aluminum material into (100) orientation, final annealing is performed.

In the final annealing, it is preferable to perform the final annealing such that the total thickness of the oxide film after the final annealing becomes 2.5 to 5 nm which is a thickness according to the Hunter Fowle method (see M. S. Hunter and P. Fowle, J. electrochem. Soc. 101[9], 483(1954)) so as not to causes a deterioration of the etching characteristics due to the excessively increased thickness of the oxide film at the final annealing. It is preferable that the (100) area ratio of the aluminum material after the final annealing is 90% or above.

Although the atmosphere at the final annealing is not specifically limited, it is preferable to heat the aluminum material within an atmosphere containing a less amount of moisture and oxygen so as not to excessively increase the thickness of the oxide film. Concretely, it is preferable to perform the heating in innert gas such as argon or nitrogen or in a vacuum of 0.1Pa or below.

The final annealing method is not specifically limited. For example, batch annealing can be performed in a state in which the aluminum material is wound into a coil, a coiled aluminum material can be continuously annealed while unwinding and then wound into a coil, or at least one of batch annealing and continuous annealing can be performed plural times.

The temperature and the time of the final annealing is not specifically limited. For example, in the case where batch annealing is performed in a coiled state, it is preferable to perform the final annealing at the aluminum actual temperature of 450 to 600 °C for 10 to 50 hours because of the following reasons. If the aluminum actual temperature is less than 450 °C and the time is less than 10 minutes, the generation of the substances which will become nuclei of etch pits in the oxide film becomes insufficient, causing a nondense status of the substances, which in turn results in an insufficient surface area increasing effect at the time of etching due to crystals as etching nuclei. This may also cause insufficient generation of (100) face crystal orientation. To the contrary, if the annealing is performed at the temperature of 600 °C or above, the aluminum material easily adheres with each other in the case where batch annealing is performed in the coiled manner. Even if the annealing is performed for more than 50 hours , the etching area increasing effect will be saturated, which merely results in an increased heat energy cost. It is more preferable that the aluminum actual temperature is 460 to 580°C and the time is 20 minutes to 40 hours.

The temperature rising rate/pattern is not specifically limited. The temperature can be raised at a constant rate, or the temperature can be raised or lowered stepwise while repeating temperature rising and holding. In any event, any temperature rising rate/patter can be accepted provided that the annealing is performed for a total of 10 minutes to 50 hours within the temperature zone in which the aluminum actual temperature is from 450 to 600 °C. The thickness of the aluminum material for electrolytic capacitor electrodes is not limited to a specific one.

The aluminum material to which the final annealing was executed is subjected to etching treatment to increase the surface area increasing ratio. Although the etching conditions are not specifically limited, it is preferable to employ a DC etching method. By employing a DC etching method, at the portions that will become nuclei of etch pits enhanced the generation thereof during the final annealing, the aluminum material is etched deeply to thereby generate a number of tunnel-like pits, resulting in high capacitance.

After the etching, it is preferable to subject the etched aluminum material to formation to obtain an anode material. Especially, it is preferable to use it as an electrode material for electrolytic capacitors for middle voltage or high voltage. Needless to say, the aluminum material can also be used as a cathode material.

An aluminum electrolytic capacitors can be made by employing the aforementioned anode material and/or cathode material as an electrode material. In this electrolytic capacitor, since the area increased ratio of the electrode material is enhanced, the capacitor has large capacitance.

In this embodiment, since the final annealing is performed after the heating of the aluminum material by contacting it with a heating body during the cold rolling steps, an aluminum material for electrolytic capacitors with even etching characteristics can be manufactured. Especially, since the contact heating is employed as a heating method, the surface temperature of the aluminum foil can be reached a targeted temperature evenly in a short time. Thus, the temperature control can be performed with comparative easy. Furthermore, since the heating can be completed quickly in a short time, it becomes possible to lessen the atmospheric influence. Accordingly, by etching this aluminum material for electrolytic capacitors, etch pits generate homogeneously. As a result, etching can be performed effectively, which in turn increases the area enlarging rate. This results in an electrolytic capacitor electrode material with increased capacitance, enabling an aluminum electrolytic capacitor with larger capacitance.

### (Second embodiment)

In this embodiment, the contact heating step for heating the aluminum material by bringing it into contact with the heating body is performed after the cold rolling but before the final annealing.

That is, after the cold rolling, the aluminum material is heated by bringing the aluminum material into contact with a heating body to thereby yield substances which will become etch pit nuclei on the surface of the aluminum material by the subsequent annealing. The reasons for employing the contact heating as a heating method are that the heating control can be performed relatively easily because the surface temperature of the aluminum material can be reached a prescribed temperature uniformly in a short time and that the atmospheric influence can be minimized because the heating can be performed in a short time.

In manufacturing an aluminum material for electrolytic capacitors, conventionally, in order to generate (100) face crystal orientation, final annealing is performed in an innert gas atmosphere or in an vacuum at a temperature range of 450 to 600 °C. However, insufficient amount of substances which will become nuclei will be generated. Thus, the contact heating is performed before the final annealing to quickly heat the aluminum material to enhance the generation of the substances which will become nuclei of etch pits such as crystalline oxide particles at the time of the final annealing.

The substances that can be nuclei of etch pits are not limited to crystalline oxides, but can be high density or thick non-crystalline substances or substances containing crystalline oxides or metal aluminum within noncrystalline. Examples of crystalline oxides include Al₂O₃ such as γ-Al₂O₃, AlOOH such as boehmite, and composite oxides included metal ingredients (such as Mg, Pb, Cu) other than aluminum. However, the crystalline oxides are not limited to metal oxides or metal hydroxides.

It is believed that substances different in property from another portion yielded in the oxide film of the aluminum material surface will become nuclei of etch pits at the time of etching. It is presumed that the quick heating of the aluminum material before the final annealing yields substances containing crystals, amorphous in the state before being transited to a crystal or a substance containing crystals or metal aluminum in amorphous and that these substances will become the nuclei of etch pits.

The reasons for employing the contact heating using a heating body as a quick heating method are that the contact heating has such advantages that: the surface temperature of the aluminum material can be reached a targeted temperature in a short time and therefore the productivity is excellent; there is less atmospheric influence because of quick heating; and uniform oxide film can be formed in the width and longitudinal directions of the aluminum coil provided that the surface temperature of the heating body which comes into contact with the surface of the aluminum material is uniform.

Hereinafter, a method of manufacturing an aluminum material for electrolytic capacitors will be explained.

The purity of the aluminum material is not specifically limited as long as it falls within a range capable of being used for electrolytic capacitors. The preferable purity is 99.9% or above, more preferably 99.95% or above. The purity of the aluminum material is defied by a value obtained by subtracting the total concentration (%) of Fe, Si, Cu, Mn, Cr, Zn, Ti and Ga from 100%.

Although the method of manufacturing the aluminum material is not limited, a melted component adjustment of aluminum materials slab casting, homogenization heat treatment, hot rolling, cold rolling including finish cold rolling (low reduction rolling) and final annealing will be performed in this order. It is preferable that (100) area ratio of the aluminum material is 90% or above, and the manufacturing conditions of the aluminum material can be arbitrarily changed in relation to the etching conditions of the aluminum material. For the purpose of eliminating the distortion of the crystal structure of the aluminum material caused by the prior rolling, annealing (hereinafter referred to as "intermediate annealing") may be performed during the cold rolling steps. Furthermore, for the purpose of eliminating impurities and/or oils on the surface of the aluminum material, washing can be performed at a step before the intermediate annealing.

The liquid using for washing a step before the intermediate annealing is not limited to a specific one, but can be alkaline aqueous solution, acid aqueous solution, or organic solvent.

The aluminum material obtained after the rolling steps has an oil in the surface thereof. Therefore, if desired, it is preferable to perform washing of the aluminum material before the final annealing but at least before the contact heating, which will be explained later, or after the contact heating. The washing enhances the effects of the contact heating, resulting in large capacitance.

In cases where the contact heating is performed without performing the washing after the rolling and large abrasion particles, etc., are adhered to the surface of the aluminum material, it is preferable to eliminate the particles by washing.

The washing liquid to be used for washing before the contact heating or after the contact heating aims degreasing. Therefore, organic solvent or water containing surfactant can be used as the washing liquid.

As the aforementioned organic solvent, substance which does not cause melting of aluminum can be used. For example, alcohol, diol, aromatic hydrocarbon such as toluene xylene, alkane series carbon hydride, cyclohexane, ketone, ether, ester and petrochemical products can be exemplified. However, the organic solvent is not limited to the above.

As the aforementioned alcohol, methanol (CH₃OH), ethanol (C₂H₅OH), 1-propanol (CH₃CH₂CH₂OH), 2-propanol (CH₃CH₂OHCH₃), 1-butanol (CH₃CH₂CH₂CH₂OH), 2-butanol (CH₃CH₂CH₂(OH)CH₃), and 1-pentanol (CH₃CH₂CH₂CH₂CH₂OH), 2-pentanol (CH₃CH₂CH₂CH₂(OH)CH₃) can be exemplified. The preferable alcohol is one represented by CₙH₂ₙ₊₁OH (n=a natural number of 1 to 10). Alicyclic hydrocarbon derivative such as cyclohexanol can also be used.

As the aforementioned diol, 1,2-ethanediol (HOCH₂CH₂OH), 1,2-propanediol (CH₃CH(OH)CH₂OH), and 1,3-propanediol (HOCH₂CH₂CH₂OH) can be exemplified.

As the aforementioned alkane series hydrocarbon, pentane (C₅H₁₂), hexane (C₆H₁₄), heptane (C₇H₁₆), octane (C₈H₁₈), nonane (C₉H₂₀) and decane (C₁₀H₂₂) can be exemplified. The preferable one is represented by CₙH₂ₙ₊₂ (n=a natural number of 5 to 15). Alicyclic hydrocarbon such as cyclohexane can also be used.

As the aforementioned ketone, acetone (CH₃COCH₃), 2- butanone (CH₃COC₂H₅), 3-pentanone (CH₃CH₂COCH₂CH₃), 3-methyl-2-butanone (CH₃COCH(CH₃)₂) can be exemplified. The preferable one is represented by R¹COR² (R¹ and R²: aliphatic hydrocarbon group, the total carbon number of R¹ and R² is 8 or less). Cyclic keton such as cyclohexanone (C₆H₁₀O) can also be used.

As the aforementioned ether, glycol ether, such as a substance represented by R¹-O-R² (R¹ and R²: aliphatic hydrocarbon group, the total carbon number of R¹ and R² is 8 or less), 2-methoxy ethanol (CH₃OCH₂CH₂OH), 2-etoxiethanol (CH₃CH₂OCH₂CH₂OH), 2-butoxiethanol (CH₃CH₂CH₂CH₂OCH₂CH₂OH), or 2-(2-etoxi)etoxiethanol (CH₃CH₂OCH₂CH₂OCH₂CH₂OH), can be exemplified.

As the aforementioned ester, acetic ester represented by CH₃COOR (R: aliphatic hydrocarbon radical whose carbon number is 1 to 5).

As the aforementioned petrochemical product, industrial gasoline (JIS K 2201), motor gasoline (JIS K 2202), aviation gasoline (JIS K 2206), Toyu (kerosene) (JIS K 2203), light oil (JIS K 2204), aviation gasoline (JIS K 2206), petroleum ether (JIS K 8593), petroleum benzine (JIS K 8594), ligroin (JIS K 8937) and kerosene can be exemplified.

As the aforementioned organic solvent, a plurality of organic solvent can be mixed. In the case of organic solvent capable of being mixed with water, such organic solvent can be mixed with water as occasion demands.

As the surfactant contained in the washing liquid in which surfactant is added to water, anionic surfactant, cationic surfactant or nonionic surfactant can be used.

As the anionic surfactant, sulfuric ester salt or sulfonate can be exemplified.

As the sulfuric ester salt, R-OSO₃Nₐ (R=saturated hydrocarbon group whose carbon number is 8∼18 or unsaturated hydrocarbon group having one double bond) can be utilized. Concretely, sodium dodecyl sulfate (C₁₂H₂₅OSO₃Nₐ), hexadecyl sodium sulfate (C₁₆H₃₃OSO₃Nₐ), Stearyl sodium sulfate (C₁₈H₃₇OSO₃Nₐ) and oleyl sodium sulfate (C₁₈H₃₅OSO₃Nₐ) can be exemplified.

As the sulfonate, sulfonate represented by R-SO₃Na (R=saturated hydrocarbon group whose carbon number is 8∼18 or unsaturated hydrocarbon group having one double bond) or R-SO₃Nₐ (R=saturated hydrocarbon group whose alkyl radial has a carbon number of 8∼14 or alkyl benzyl group which is unsaturated hydrocarbon group having one double bond) can be used.

As the cation surfactant, quaternary ammonium salt represented by R-N⁺(CH₃)₃·Cl⁻ (R=saturated hydrocarbon group whose carbon number is 8∼16) can be used.

As the nonionic surfactant, polyethyleneglycol type nonionic surfactant represented by R-O-(-CH₂CH₂O)ₙH (R=saturated hydrocarbon group whose carbon number is 8∼16 or unsaturated hydrocarbon group having one double bond, n=6∼14) or R-O-(-CH₂CH₂O)ₙH (R=saturated hydrocarbon group whose alkyl radial has a carbon number of 8∼12 or alkylphenyl group which is unsaturated hydrocarbon group having one double bond, n=6∼14) can be exemplified. Nonionic surfactant with "n" exceeding the aforementioned range can be contained in the nonionic surfactant at the molar ratio of 50% or less.

Water to which at least one of the aforementioned surfactants is added can be used as the washing liquid. Surfactant whose carbon number is smaller than the aforementioned range can be contained at the molar ratio of 50% or less. It is preferable to avoid mixing the anion surfactant and the cation surfactant since the mixing thereof in water causes precipitation.

Although the concentration of the surfactant is not specifically limited, it is preferable that the concentration is the critical micelle concentration or above to enhance the washing effects.

In the aforementioned washing step, the method of contacting the aluminum material with organic solvent or surfactant solution used as washing liquid is not limited to a specific method. As such a method, immersing, contacting the aluminum material with the surface of the washing liquid and spraying can be exemplified.

To eliminate oil and/or abrasion particles on the surface of the aluminum material, the aluminum material can be brought into contact with, or further rubbed with a brush or a sponge when the aluminum material is in contact with the washing liquid.

In the washing step, the contact time of the aluminum material with the washing liquid is not specifically limited. However, it is preferable that the contact time is more than 0.5 second but less than 10 minutes. If the contact time of the aluminum material with the washing liquid is less than 0.5 second, the washing becomes insufficient. To the contrary, even if the contact time is longer than 10 minutes, the washing effect will be saturated. In cases where the washing liquid is organic solvent, the preferable liquid temperature of the washing liquid is 5 to 60 °C, and in cases where the washing liquid is water containing surfactant, the preferable liquid temperature of the washing liquid is 5 to 80 °C. If the liquid temperature is lower than the lower limit, the detergency will be insufficient. To the contrary, even if the liquid temperature is raised above the upper limit, the detergency will be saturated.

After washing the aluminum material, the aluminum material can be dried if necessary. The drying can be performed by, for example, heating in air, heating in an inert gases atmosphere, heating in a vacuum. In the case where the drying is performed in air, the preferable atmospheric temperature is 200 °C or below, and the drying time is 10 minutes or less because the drying temperature exceeding 200°C or the heating time exceeding 10 minutes causes a too-grown oxide film, resulting in deteriorated etching characteristics.

The aluminum material rolled or the aluminum material rolled and then washed will be subjected to contact heating to generate a larger number of nuclei of etch pits by the subsequent annealing. The means for the contact heating can be any means capable of attaining the contact heating such as a heated roll, a heated belt or a heated plate. To easily and continuously perform the contact heating, it is preferable to use the heated roll. Furthermore, the aluminum material can be heated both sides or either one side. The heating surface material of the heating body can be an arbitrarily selected material such as stainless, plating, ceramic, Teflon (registered trademark) resin, and silicone resin. However, it is preferable to select a material which does not cause adhesion of the surface oxide film of the aluminum material to the surface of the heating body.

The surface temperature of the heating body which comes into contact with the aluminum material is preferably 50 to 450 °C. If the surface temperature is below 50 °C, the heating becomes insufficient, which may result in insufficient generation of substances which will become nuclei of etch pits such as crystalline oxide particles at the time of final annealing which will be performed after the contact heating. To the contrary, if it exceeds 450°C, the oxide film becomes too thick, causing winkles at the time of the cooling, which may cause operational problems. More preferably, the surface temperature of the heating body is 80 to 400°C, still more preferably 100 to 350°C. The optimal surface temperature of the heating body is 160 to 290°C.

The preferable contact time of the surface of the aluminum material and the surface of the heating body is 0.001 to 60 seconds. If the contact time is less than 0.001 second, the heating of the surface of the aluminum material becomes insufficient, which may cause insufficient generation of substances which will become nuclei of etch pits. To the contrary, even if the heating is performed longer than 60 seconds, the oxide film becomes too thick, which may impede the generation of etch pits. The more preferable contact time is 0.001 to 30 seconds, still more preferably 0.01 to 10 seconds. The optimal contact time is 0.1 to 7 seconds.

The surface temperature of the heating body and the contact time can be determined arbitrarily considering the characteristics of the surface oxide film of the aluminum material before the contact heating. The contact heating atmosphere is not specifically limited, and the contact heating can be performed in the air without performing specific atmospheric control.

As an example of a heating apparatus using heating rolls as the heating body, a device provided with at least two heating rolls for performing the contact heating of the front and rear surfaces of the aluminum material can be exemplified. In cases where the aluminum material after the contact heating with heating rolls wrinkles at the time of rolling the aluminum material, the aluminum material can be rolled up after cooling the aluminum material by passing through one or a plurality of cooling bodies such as cooling rolls after the heating with heating rolls or the like. Especially, in cases where cooling rolls are used as cooling bodies, the cooling can be performed easily and continuously. Furthermore, before heating the aluminum material with heating rolls to the targeted contact heating temperature, the aluminum material can be pre-heated to a temperature lower than the targeted contact heating temperature by the use of other heating rolls.

Subsequent to the contact heating, after the aforementioned washing if necessary, for the primary purpose of the encourage of the production of substances which will become nuclei of etch pits and the enhancement of the etching characteristics by arranging the crystal orientation of the aluminum material into (100) orientation, final annealing is performed,

Needless to say, after the final rolling but before the final annealing, another steps other than the aforementioned steps, such as slitting step for dividing the coiled aluminum material, can also be performed.

In the final annealing, it is preferable to perform the final annealing such that the total thickness of the oxide film after the final annealing becomes 2.5 to 5 nm which is a thickness according to the Hunter Fowle method (see M. S. Hunter and P. Fowle, J. electrochem. Soc. 101[9], 483(1954)) so as not to causes a deterioration of the etching characteristics due to the excessively increased thickness of the oxide film at the final annealing. It is preferable that the (100) area ratio of the aluminum material after the final annealing is 90% or above.

Although the atmosphere at the final annealing is not specifically limited, it is preferable to heat the aluminum material within an atmosphere containing a less amount of moisture and oxygen so as not to excessively increase the thickness of the oxide film. Concretely, it is preferable to perform the heating in an innert gas such as argon or nitrogen or in a vacuum of 0.1Pa or below.

The final annealing method is not specifically limited. For example, batch annealing can be performed in a state in which the aluminum material is wound into a coil, a coiled aluminum material can be continuously annealed while unwinding and then wound into a coil, or either batch annealing or continuous annealing can be performed plural times.

The temperature and the time of the final annealing is not specifically limited. For example, in the case where batch annealing is performed in a coiled state, it is preferable to perform the final annealing at the aluminum actual temperature of 450 to 600 °C for 10 minutes to 50 hours because of the following reasons. If the aluminum actual temperature is less than 450°C and the time is less than 10 minutes, the generation of the substances which will become nuclei of etch pits in the oxide film becomes insufficient, causing a nondense status of the substances, which in turn results in an insufficient surface area increasing effect at the time of etching due to crystals as etching nuclei. This may also cause insufficient generation of (100) face crystal orientation. To the contrary, if the annealing is performed at the temperature of 600 °C or above, the aluminum material easily adheres with each other in the case where batch annealing is performed in the coiled manner. Even if the annealing is performed for more than 50 hours, the etching area increasing effect will be saturated, which merely results in an increased heat energy cost. It is more preferable that the aluminum actual temperature is 460 to 600 °C, more preferably 500 to 580°C, and the time is 20 minutes to 40 hours.
The temperature rising rate/pattern is not specifically limited. The temperature can be raised at a constant rate, or the temperature can be raised or lowered stepwise while repeating temperature rising and holding. In any event, any temperature rising rate/patter can be accepted provided that the annealing is performed for a total of 10 minutes to 50 hours within the temperature zone in which the aluminum actual temperature is from 450 to 600 °C. The thickness of the aluminum material for electrolytic capacitor electrodes to be obtained after the final annealing is not limited to a specific one.

The aluminum material to which the final annealing was executed is subjected to etching treatment to increase the surface area increasing ratio. Although the etching conditions are not specifically limited, it is preferable to employ a DC etching method. By employing a DC etching method, at the portions that will become nuclei of etch pits enhanced the generation thereof during the final annealing, the aluminum material is etched deeply to thereby generate a number of tunnel-like pits, resulting in high capacitance.

After the etching, it is preferable to subject the etched aluminum material to a formation to obtain an anode material. Especially, it is preferable to use it as an electrode material for electrolytic capacitors for middle voltage or high voltage. Needless to say, the aluminum material can also be used as a cathode material.

An aluminum electrolytic capacitors can be made by employing the aforementioned anode material and/or cathode material as an electrode material. In this electrolytic capacitor, since the area increased ratio of the electrode material is enhanced, the capacitor has large capacitance.

In this embodiment, since the aluminum material is brought into contact with a heating body after the cold rolling and then subjected to the final annealing, an aluminum material for electrolytic capacitors with excellent etching characteristics because of a large number of yielded substances which will become etch pit nuclei on the surface of the aluminum material can be manufactured. Especially, since the contact heating is employed as a heating method, the surface temperature of the aluminum foil can be reached a targeted temperature evenly in a short time. Thus, the temperature control can be performed with comparative easy. Furthermore, since the heating can be completed quickly in a short time, it becomes possible to lessen the atmospheric influence. Accordingly, by etching this aluminum material for electrolytic capacitors, etch pits generate homogeneously. As a result, etching can be performed effectively, which in turn increases the area enlarging rate. This results in an electrolytic capacitor electrode material with increased capacitance, enabling an aluminum electrolytic capacitor with larger capacitance.

Furthermore, by performing the washing of the aluminum material after or before the contact heating with a heating body, capacitance increasing effect can be obtained.

### (Third embodiment)

In this embodiment, an aluminum material is washed with liquid capable of melting aluminum after the cold rolling, and then a contact heating step for heating the aluminum material by bringing it into contact with the heating body is performed after the final annealing.

The contact heating of the aluminum material by bringing it into contact with a heating body is excellent in that the surface temperature of the aluminum material can be reached the targeted temperature with the contacting surface of the heating body in a short time, and has a merit that the temperature control can be performed easily.

The reason why the etching of the aluminum material obtained by the aforementioned manufacturing method causes an increased effective area thereof is that the contact heating performed before the annealing makes the oxide film of the aluminum material surface layer stable, which causes uniform generation of crystalline particles which will become etch pits on the surface of the aluminum material at the time of the final annealing.

Examples of the aforementioned crystalline oxide particles include Al₂O₃ such as γ-Al₂O₃, AlOOH such as boehmite, oxide or hydroxide of metal ingredients (such as Mg, Pb, Cu) other than aluminum, or composite metal oxides or hydroxides included aluminum and metal ingredients (such as Mg, Pb, Cu) other than aluminum, but is not limited thereto. Furthermore, the crystalline oxide particle can be either monocrystal or polycrystal. Furthermore, the particle can be a particle in which one or plural crystals are covered with amorphous substances, or can be aggregated oxide crystals having amorphous oxides therebetween.

Hereinafter, a method of manufacturing an aluminum material for electrolytic capacitor electrodes will be explained.

The purity of the aluminum material is not specifically limited as long as it falls within a range capable of being used for electrolytic capacitor electrodes. The preferable purity is 99.9% or above, more preferably 99.95% or above. In the present invention, the purity of the aluminum material is defied by a value obtained by subtracting the total concentration (%) of Fe, Si, Cu, Mn, Cr, Zn, Ti and Ga from 100%.

The aluminum material to be subjected to washing with a liquid capable of melting aluminum is generally manufactured by the steps of: a melted component adjustment of aluminum materials · slab casting; homogenization heat treatment; hot rolling; cold rolling; intermediate annealing; and finish cold rolling (low reduction rolling). In these steps, a conventional method can be employed, and the method is not specifically limited. The manufacturing conditions of the aluminum material can be arbitrarily changed in relation to the etching conditions of the aluminum material.

For the purpose of eliminating the distortion of the crystal structure of the aluminum material caused by the prior rolling, annealing (intermediate annealing) may be performed during the cold rolling steps. Furthermore, for the purpose of eliminating impurities and/or oils on the surface of the aluminum material, washing using acid solution, alkaline solution, or organic solvent can be performed at a step before the intermediate annealing.

In order to yield a uniform and stable oxide film on the surface layer of the aluminum material to thereby disperse crystalline oxide particles which will become etch pit nuclei on the surface of the aluminum material at the time of the final annealing, the aluminum material is washed with a liquid capable of melting aluminum after the final rolling, and thereafter subjected to the contact heating.

As the liquid capable of dissolving aluminum, aqueous solution containing at least one element selected from the group consisting of acid, alkali, ammonia and amine. It is preferable to perform at least one of alkali washing and acid washing after the final rolling.

As the alkali of the alkali washing liquid for the alkali is not limited to a specific one, but sodium hydroxide, potassium hydroxide, calcium hydroxide, sodium silicate, sodium tertiary phosphate, disodium hydrogen phosphate, and sodium hypochlorite can be exemplified. Aqueous solution containing at least one of the aforementioned alkalis can be used as washing liquid.

It is preferable that the alkali concentration in the alkali washing liquid is 0.005 to 50% (mass%, hereinafter simply referred to as "%"), the liquid temperature is 5 to 80 °C, and the washing time is 1 second to 10 minutes. If the alkali concentration is less than 0.005% or the liquid temperature is 5°C, there is a possibility that the surface homogenization effect by the washing cannot be obtained. If the alkali concentration exceeds 50%, it takes a lot of trouble to eliminate the alkali remaining on the surface of the aluminum material after the alkali washing. If the liquid temperature exceeds 80 °C, the aluminum material dissolves quickly, which makes it difficult to control the washing. If the alkali washing time is less than 1 second, the washing becomes insufficient. However, even if the washing time exceeds 10 minutes, the washing effect will be saturated, which may cause excessive dissolving of the aluminum material. More preferably, the alkali concentration in the alkali washing liquid is 0.05 to 10%, the liquid temperature is 10 to 70 °C, and the washing time is 2 seconds to 5 minutes.

After the alkali washing, it is preferable to perform water washing for the purpose of eliminating the residuals of the washing liquid compositions on the surface of the aluminum material.

On the other hand, although the acid of the acid washing liquid for the acid washing is not specifically limited, Lewis acid can be used. For example, inorganic acid such as hydrochloric acid, sulfuric acid, phosphoric acid, nitric acid, boric acid or hydrofluoric acid, and organic acid such as acetic acid, oxalic acid or citric acid can be exemplified, and aqueous solution containing at least one of these acids can be used as the washing liquid. Furthermore, in order to enhance the degreasing power, surfactant can be added to acid aqueous solution. It is preferable that the concentration of the acid is 0.05 to 50%, the liquid temperature is 5 to 80 °C, and the washing time is 0.5 second to 10 minutes. If the acid concentration at the time of the acid washing, the liquid temperature and the washing time are below the aforementioned lower limit, the washing may be insufficient. To the contrary, if the acid concentration, the liquid temperature and the washing time exceeds the aforementioned upper limit, the washing effect will be saturated, resulting in an increased cost. More preferably, the acid concentration is 0.05 to 30%, the liquid temperature is 10 to 70 °C and the washing time is 1 second to 5 minutes.

After the acid washing, it is preferable to perform water washing for the purpose of eliminating the residuals of the acid washing liquid compositions on the surface of the aluminum material.

As the method of the alkali washing and the acid washing, an immersing method or a spraying method can be exemplified, but the washing method is not limited to a specific one.

It is enough to perform at least one of the alkali washing and the acid washing. However, both the washing can be performed at least one time. In the case of performing both washing, although the order is not specifically limited, it is preferable that the alkali washing is initially performed and the acid washing follows. In this case, after effectively removing the contaminated layer of the surface of the aluminum material by the alkali washing, the surface thereof is neutralized by performing the acid washing, resulting in a formation of homogeneous and stable oxide film.

The acid concentration in the case of performing the acid washing after the alkali washing can be lower then the aforementioned range of 0.05 to 50%, and the washing time can be shorter than the aforementioned range of 0.5 second to 10 minutes.

Before the alkali washing or acid washing, the aluminum material can be subjected to organic solvent washing for the purpose of decreasing. As the organic solvent, aromatic hydrocarbon such as alcohol or toluene xylene, pentane, hexane, aliphatic hydrocarbon, acetone, ketone, and ester can be exemplified.

Subsequently, the aluminum material subjected to the washing using a liquid capable of making aluminum dissolve is heated by bringing it into contact with a heating body.

The means for the contact heating can be anything capable of attaining the contact heating such as a heated roll, a heated belt or a heated plate, or a combination thereof. Furthermore, the aluminum material can be heated simultaneously from both sides, or heated one side then another side, or heated only either one side. The heating surface material of the heating body can be an arbitrarily selected material such as stainless, plating, ceramic, Teflon (registered trademark) resin, and silicone resin. However, it is preferable to select a material which does not cause adhesion of the surface oxide film of the aluminum material to the surface of the heating body.

The surface temperature of the heating body which is brought into contact with the aluminum material is preferably 50 to 450 °C. If the surface temperature is below 50 °C, the crystallization ratio of the surface layer oxide film after the annealing or the control of the crystalline oxide particles become insufficient. To the contrary, if it exceeds 450°C, the oxide film becomes too thick, causing winkles at the time of the cooling, which may cause operational problems. More preferably, the surface temperature of the heating body is 80 to 400°C, optimally 80 to 300°C.

The preferable contact time of the surface of the aluminum material and the surface of the heating body is 0.001 to 60 seconds. If the contact time is less than 0.001 second, the heating of the surface of the aluminum material becomes insufficient. If the heating time exceeds 60 seconds, the oxide film becomes too thick. In either case, the generation of etch pits may be impeded. The more preferable contact time is 0.001 to 30 seconds, still more preferably 0.01 to 20 seconds. The optimal contact time is 0.05 to 15 seconds.

The surface temperature of the heating body and the contact time can be determined arbitrarily considering the characteristics of the oxide film of the aluminum material surface before the contact heating. The contact heating atmosphere is not specifically limited, and the contact heating can be performed in the air without performing specific atmospheric control.

Subsequent to the contact heating, for the primary purpose of improving the etching characteristics by arranging the crystal orientation of the aluminum material into (100) orientation, final annealing is performed.

In the final annealing, it is preferable to perform the final annealing such that the total thickness of the oxide film after the final annealing becomes 2.5 to 5.0 nm which is a thickness according to the Hunter Fowle method (see M.S. Hunter and P. Fowle, J. electrochem. Soc. 101[9], 483(1954)) so as not to causes a deterioration of the etching characteristics due to the excessively increased thickness of the oxide film at the final annealing. It is preferable that the (100) area ratio of the aluminum material after the final annealing is 90% or above.

Although the atmosphere at the final annealing is not specifically limited, it is preferable to heat the aluminum material within an atmosphere containing a less amount of moisture and oxygen so as not to excessively increase the thickness of the oxide film. Concretely, it is preferable to perform the heating in an innert gas such as argon or nitrogen or in a vacuum of 0.1Pa or below.

The final annealing method is not specifically limited. For example, batch annealing can be performed in a state in which the aluminum material is wound into a coil, a coiled aluminum material can be continuously annealed while unwinding and then wound into a coil, or either batch annealing or continuous annealing can be performed plural times.

The holding temperature and the time of the final annealing is not specifically limited. For example, in the case of performing batch annealing in a coiled state, it is preferable to perform the final annealing at the aluminum actual temperature of 450 to 600 °C for 10 minutes to 50 hours because of the following reasons. If the aluminum actual temperature is less than 400°C and the time is less than 10 minutes, the generation of the crystalline oxide particles which will become nuclei of etch pits in the oxide film becomes insufficient, causing a nondense status of the substances, which in turn results in an insufficient surface area increasing effect at the time of etching in the presence of crystals as etching nuclei. This may also cause insufficient generation of (100) side crystal orientation. To the contrary, if the annealing is performed at the temperature of 600 °C or above, the aluminum material easily adheres with each other in the case of performing batch annealing in the coiled manner. Even if the annealing is performed for more than 50 hours, the etching area increasing effect will be saturated, which merely results in an increased heat energy cost. It is more preferable that the aluminum actual temperature is 460 to 560 °C and the time is 30 minutes to 40 hours.

The temperature rising rate/pattern is not specifically limited. The temperature can be raised at a constant rate, or the temperature can be raised or lowered stepwise while repeating temperature rising and holding. In any event, any temperature rising rate/patter can be accepted provided that the annealing is performed for a total of 10 minutes to 50 hours within the temperature zone in which the aluminum actual temperature is from 450 to 600 °C.

The thickness of the aluminum material for electrolytic capacitor electrodes to be obtained after the final annealing is not limited to a specific one.

The aluminum material to which the final annealing was executed is subjected to etching treatment to increase the surface area. Although the etching conditions are not specifically limited, it is preferable to employ a DC etching method. By employing a DC etching method, crystalline oxide particles existing on the surface of the aluminum material will become nuclei of etch pits to thereby generate a number of tunnel-like pits.

After the etching, it is preferable to subject the etched aluminum material to a formation to obtain an anode material. Especially, it is preferable to use it as an electrode material for electrolytic capacitors for middle voltage or high voltage. Needless to say, the aluminum material can also be used as a cathode material.

With this embodiment, the aluminum material after the washing with a solution capable of dissolving aluminum is subjected to contact heating to stabilize the surface layer oxide film of the aluminum material, and then annealed. Thus, an aluminum material for electrolytic capacitor electrodes excellent in etching characteristics and capable of obtaining high capacitance can be manufactured. Especially, since the contact heating is employed as a heating method, the surface temperature of the aluminum material can be reached a targeted temperature evenly in a short time. Thus, the temperature control can be performed with comparative easy. Furthermore, since the heating can be completed quickly in a short time, it becomes possible to lessen the atmospheric influence.

### (Fourth embodiment)

In this embodiment, the contact heating step for heating the aluminum material by bringing it into contact with the heating body is performed after the final annealing.

That is, by heating the aluminum material after the final annealing by bringing the aluminum material into contact with a heating body, the surface layer oxide film of the aluminum material can be formed homogeneously, resulting in an aluminum material for electrolytic capacitor electrodes excellent in etching characteristics. The reasons for employing the contact heating as a heating method are that the heating control has advantages: the surface temperature of the aluminum material can be reached a prescribed temperature uniformly in a short time with the heating body surface; the control is relatively easy; the productivity is high; the atmospheric influence can be minimized because of the quick heating; and uniform oxide film can be performed in the widthwise and longitudinal directions of the aluminum material.

Hereinafter, a method of manufacturing an aluminum material for electrolytic capacitors will be explained.

The purity of the aluminum material is not specifically limited as long as it falls within a range capable of being used for electrolytic capacitors. The preferable purity is 99.9% or above, more preferably 99.95% or above. The purity of the aluminum material is defied by a value obtained by subtracting the total concentration (%) of Fe, Si, Cu, Mn, Cr, Zn, Ti and Ga from 100%.

Although the method of manufacturing the aluminum material is not specifically limited, a melted component adjustment of aluminum materials · slab casting, homogenization heat treatment, hot rolling, cold rolling including finish cold rolling (low reduction rolling) and final annealing will be performed in this order. The manufacturing conditions of the aluminum material can be arbitrarily changed in relation to the etching conditions of the aluminum material. For the purpose of eliminating the distortion of the crystal structure of the aluminum material caused by the prior rolling, annealing ("intermediate annealing") may be performed during the rolling steps.

Furthermore, for the purpose of eliminating impurities and/or oils on the surface of the aluminum material, washing can be performed after the hot rolling, during the cold rolling, or after the finish cold rolling but before the final annealing. The washing solution to be used for the washing is not limited to a specific one, and alkaline aqueous solution, acid aqueous solution or organic solvent can be utilized for example.

The aluminum material subjected to the hot rolling can be treated in a coiled state until the contact heating which will be performed after the final annealing. The aluminum material can be cut at the intermediate step to handle as cut samples. In the case of treating in a coiled state, a slit can be formed at any step before the final annealing, after the final annealing, or after the contact heating.

Subsequent to the final cold rolling, after the washing, etc. if required, for the primary purpose of improving the etching characteristics by arranging the crystal orientation of the aluminum material into (100) orientation, final annealing will be performed.

In the final annealing, it is preferable to perform the final annealing such that the total thickness of the oxide film after the final annealing becomes 2. 5 to 5 nm which is a thickness according to the Hunter Fowle method (see M.S. Hunter and P. Fowle, J. electrochem. Soc. 101[9], 483(1954)) so as not to causes a deterioration of the etching characteristics due to the excessively increased thickness of the oxide film at the final annealing. It is preferable that the (100) area ratio of the aluminum material after the final annealing is 90% or above.

Although the atmosphere at the final annealing is not specifically limited, it is preferable to heat the aluminum material within an atmosphere containing a less amount of moisture and oxygen so as not to excessively increase the thickness of the oxide film. Concretely, it is preferable to perform the heating in an innert gas such as argon or nitrogen or in a vacuum of 0.1Pa or below.

The final annealing method is not specifically limited. For example, batch annealing can be performed in a state in which the aluminum material is wound into a coil, a coiled aluminum material can be continuously annealed while unwinding and then wound into a coil, or either batch annealing or continuous annealing can be performed plural times.

The temperature and the time of the final annealing is not specifically limited. For example, in the case of performing batch annealing in a coiled state, it is preferable to perform the final annealing at the aluminum actual temperature of 450 to 600 °C for 10 to 50 hours because of the following reasons. If the aluminum actual temperature is less than 450 °C and the time is less than 10 minutes, there is a possibility that the state of the aluminum surface layer does not become suitable for etching and the growth of (100) face crystal orientation becomes insufficient. To the contrary, if the annealing is performed at the temperature of 600 °C or above, the aluminum material easily adheres with each other in the case of performing batch annealing in the coiled manner. Even if the annealing is performed for more than 50 hours, the etching area increasing effect will be saturated, which merely results in an increased heat energy cost. It is more preferable that the aluminum actual temperature is 460 to 580 °C and the time is 20 minutes to 40 hours.

The temperature rising rate/pattern is not specifically limited. The temperature can be raised at a constant rate, or the temperature can be raised or lowered stepwise while repeating temperature rising and holding. In any event, any temperature rising rate/patter can be accepted provided that the annealing is performed for a total of 10 minutes to 50 hours within the temperature zone in which the aluminum actual temperature is from 450 to 600 °C.

After the final annealing, the aluminum material is subjected to, after the surface washing if necessary, the contact heating to obtain a homogeneous surface oxide film. The heating means can be anything provided that it is capable of attaining the contact heating such as a heated roll, a heated belt or a heated plate. Furthermore, the aluminum material can be heated one side then another side, or heated only either one side. The heating surface material of the heating body can be an arbitrarily selected material such as stainless, plating, ceramic, Teflon (registered trademark) resin, and silicone resin. However, it is preferable to select a material which does not cause adhesion of the surface oxide film of the aluminum material to the surface of the heating body.

The surface temperature of the heating body which will be brought into contact with the aluminum material is preferably 50 to 450 °C. If the surface temperature is below 50 °C, the heating may become insufficient, resulting in non-uniform etch pits by etching. To the contrary, if it exceeds 450°C, the oxide film becomes too thick, causing winkles at the time of the cooling, which may cause operational problems. More preferably, the surface temperature of the heating body is 80 to 400°C, still more preferably 100 to 350 °C. The optimal surface temperature of the heating body is 160 to 290 °C.

The preferable contact time of the surface of the aluminum material and the surface of the heating body is 0.001 to 60 seconds. If the contact time is less than 0.001 second, a homogeneous surface oxide layer of the aluminum material cannot be obtained, causing uneven generation of etch pits. To the contrary, if the heating time exceeds 60 seconds, the oxide film becomes too thick, which impedes the generation of the etch pits. The more preferable contact time is 0.01 to 30 seconds, still more preferably 0.05 to 10 seconds.

The surface temperature of the heating body and the contact time can be determined arbitrarily considering the characteristics of the oxide film of the aluminum material before the contact heating. The contact heating atmosphere is not specifically limited, and the contact heating can be performed in the air without performing specific atmospheric control.

As an example of a heating apparatus using heating rolls as the heating body, a device provided with at least two heating rolls for performing the contact heating of the front and rear surfaces of the aluminum material can be exemplified. In cases where the aluminum material after the contact heating with heating rolls wrinkles at the time of rolling the aluminum material, the aluminum material can be rolled up after cooling the aluminum material by passing through one or a plurality of cooling bodies such as cooling rolls after the heating with heating rolls or the like. Especially, in cases where cooling rolls are used as cooling bodies, the cooling can be performed easily and continuously. Furthermore, before heating the aluminum material with heating rolls to the targeted contact heating temperature, the aluminum material can be pre-heated to a temperature lower than the targeted contact heating temperature by the use of another heating rolls.

The thickness of the aluminum material for electrolytic capacitor electrodes to be obtained after the final annealing is not limited to a specific one.

The aluminum material to which the contact heating was executed after the final annealing is subjected to etching treatment to increase the surface area. Although the etching conditions are not specifically limited, it is preferable to employ a DC etching method. By employing a DC etching method for aluminum with homogeneous surface layer oxide film, a number of tunnel-like pits are generated, which in turn realizes high capacitance.

After the etching, it is preferable to subject the etched aluminum material to a formation to obtain an anode material. Especially, it is preferable to use it as an electrode material for electrolytic capacitors for middle voltage or high voltage. Needless to say, the aluminum material can also be used as a cathode material.

An aluminum electrolytic capacitors can be made by employing the aforementioned anode material and/or cathode material as an electrode material. In this electrolytic capacitor, since the area increased ratio of the electrode material is enhanced, the capacitor has large capacitance.

With this embodiment, by heating the aluminum material by coming into contact with a heating body after the final annealing, the surface layer oxide film of the aluminum material can be homogenized. Thus, an aluminum material for electrolytic capacitor electrodes excellent in etching can be manufactured. Especially, since the contact heating is employed as a heating method, the surface temperature of the aluminum material can be reached a targeted temperature evenly in a short time. Thus, the temperature control can be performed with comparative easy. Furthermore, since the heating can be completed quickly in a short time, it becomes possible to lessen the atmospheric influence. Accordingly, by etching the aluminum material for electrolytic capacitors, the etch pits can be generated homogeneously, causing an enhanced surface area increasing ratio, which in turn results in an aluminum material for electrolytic capacitor electrodes with increased capacitance. As a result, an aluminum electrolytic capacitance having a larger capacitance can be obtained.

### EXAMPLE

### [First examples]

These examples correspond to the first embodiment.

### (Example 1)

A plate obtained by hot-rolling an aluminum slab was subjected to cold rolling to obtain an aluminum material coil 250 µm in thick with a purity of 99.99%. This aluminum material coil was further subjected to cold rolling to obtain an material 140 µm in thick, then brought into contact with a heating roll with a surface temperature of 200 °C for 2 seconds, and thereafter brought into contact with a cooling roll with a surface temperature of 30 °C. Subsequently, the coiled aluminum material was held in a nitrogen atmosphere at the actual temperature of 250 °C for 24 hours to execute the intermediate annealing, and then subjected to finish cold rolling.

The aluminum material after the finish cold rolling was washed with n-hexane. The actual temperature of the washed aluminum material was raised from the room temperature to 540°C in an argon atmosphere at the rate of 50 °C/h, then hold at 540 °C for 24 hours. Subsequently, the aluminum material was cooled and taken out of the furnace to thereby obtain an aluminum material 500 mm in width and 1,000 m in length for electrolytic capacitor electrodes.

### (Examples 2 to 16)

In the same manner as in Example 1, a plate obtained by hot-rolling an aluminum slab was subjected to cold rolling to obtain an aluminum material coil 250 µm in thick with a purity of 99.99%. Then, the steps shown in Table 1 were performed sequentially to thereby obtain an aluminum material 500 mm in width and 1,000 m in length for electrolytic capacitor electrodes, respectively.

### (Comparative Example 1)

An aluminum material for electrolytic capacitor electrodes was obtained in the same manner except that the contact heating was not performed during the cold rolling.

Each of the aluminum materials obtained in the aforementioned Examples and Comparative Example was immersed in an aqueous solution having a liquid temperature of 75 °C containing HCl 1.0 mol/l and H₂SO₄ 3.5 mol/l, and then electrolyzed at the current density of 0.2 A/m². Each electrolyzed aluminum material was further immersed in a hydrochloric acid-sulfuric acid mixed aqueous solution having the aforementioned compositions at the temperature of 90 °C for 360 seconds to increase the pit diameter to thereby obtain an etched foil. The obtained etched foil was subjected to formation at the voltage of 270 V in accordance with EIAJ standard to obtain a capacitance measuring sample.

The capacitance of each aluminum material obtained in Examples and Comparative Example was measured at a total of 6 portions, i.e., three portions, a widthwise central portion and two inside portions of 100 mm from the right and left widthwise edges at the longitudinal portions of 100 m and 900 m from the longitudinal end portion of the coiled aluminum material.

The measured capacitance of each sample is shown in Table 1 as a relative value where Comparative Example is 100.

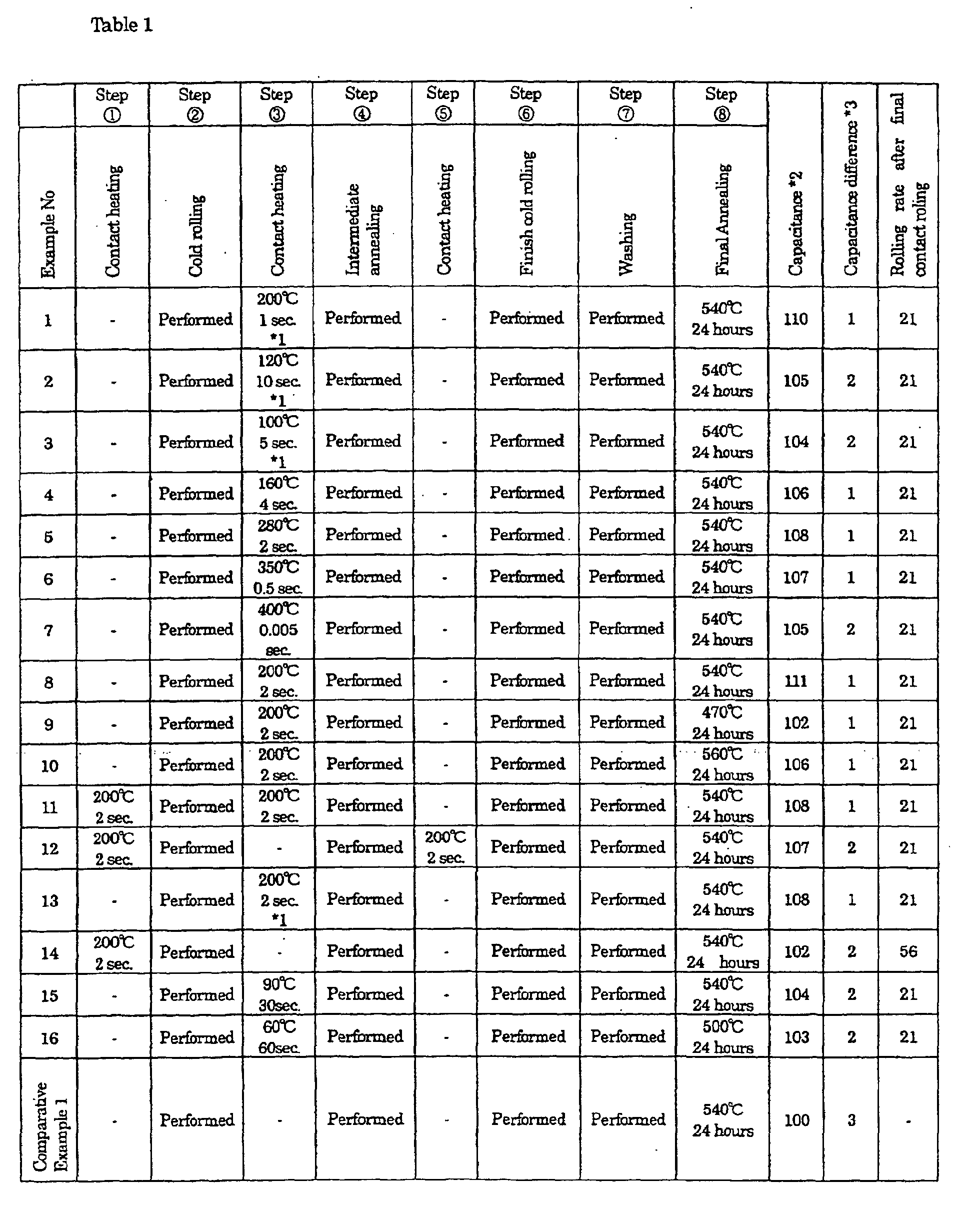

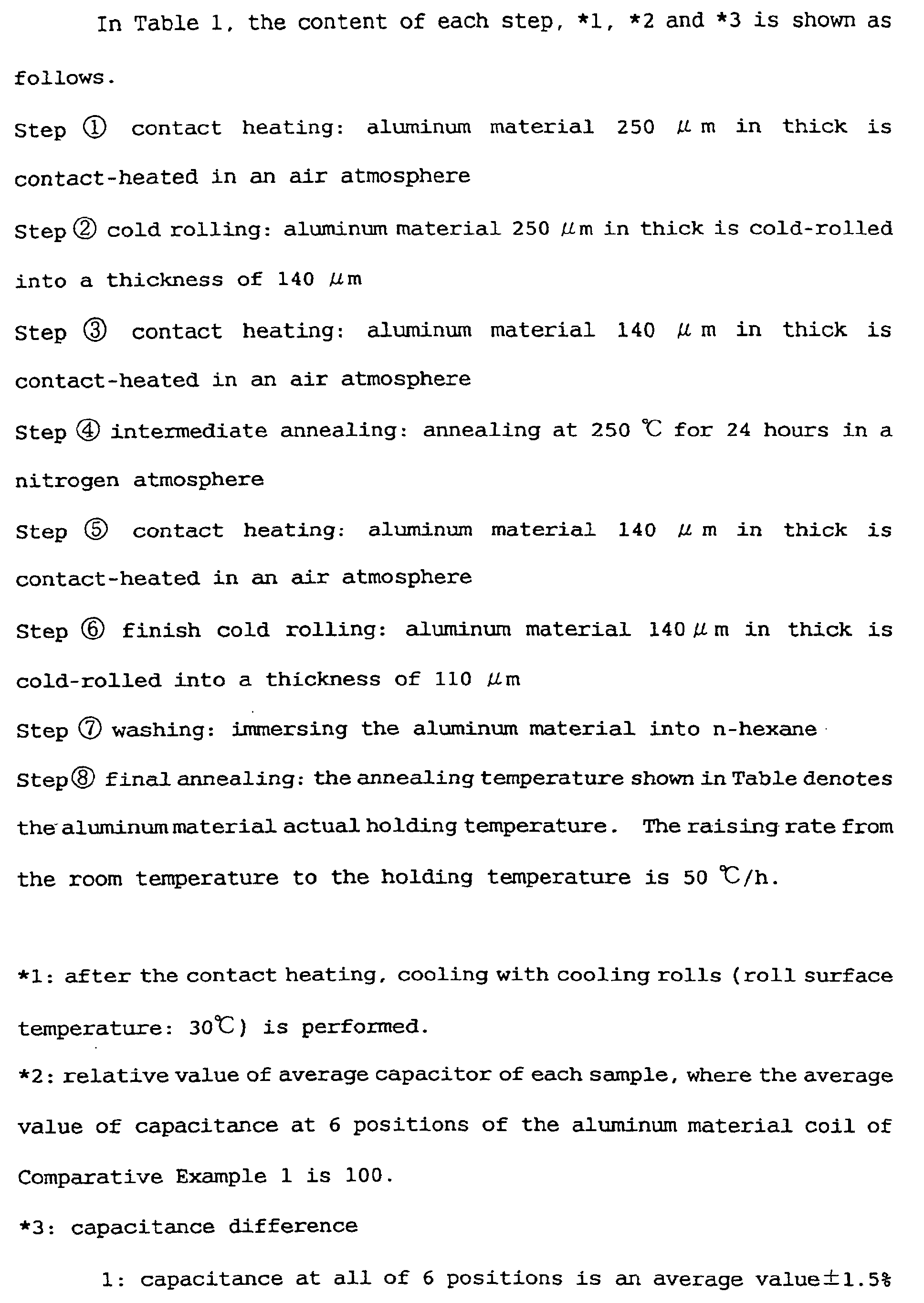

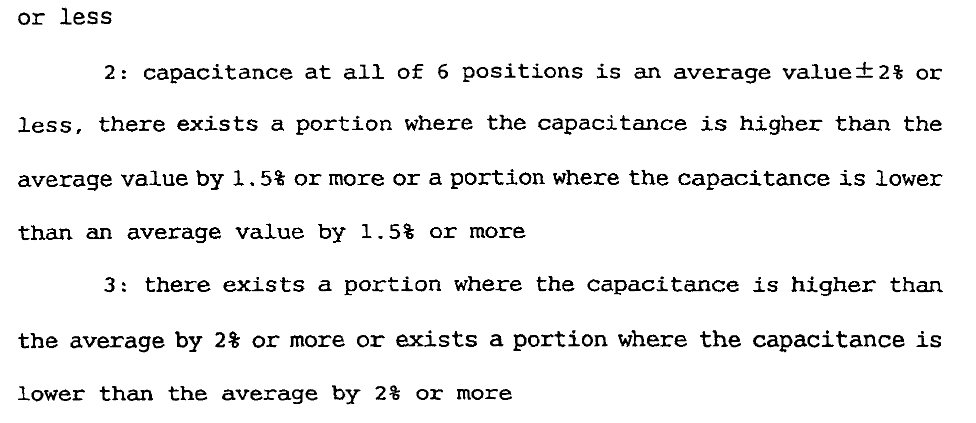

From the Examples and Comparative Example shown in Table 1, performing the contact eating during the cold rolling can make capacitance fluctuations smaller and increase the capacitance.

### [Second Example]

This example corresponds to a second embodiment.

### [Examples 101 to 112 and Comparative Examples 101 to 103]

### (Example 101)

An aluminum material with a purity of 99.99% rolled into 110 µ m in thick was prepared. The obtained aluminum material was immersed in alkane series hydrocarbon for 2 seconds, dried in air at 90 °C for 1 minute, and then contact-heated in the air for 2 seconds by pinched by and between two sheets of stainless heating plates having a surface temperature of 200 °C. In a state in which the contact-heated aluminum materials are piled up, the actual temperature of the aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Example 102)

In the same manner as in Example 101, an aluminum material with a purity of 99.99% rolled into 110 µm in thick was prepared. The obtained aluminum material was immersed in alkane series hydrocarbon for 2 seconds, dried in air at 90 °C for 1 minute, and then contact-heated in the air for 2 seconds by pinched by and between two sheets of stainless heating plates having a surface temperature of 250 °C. In a state in which the contact-heated aluminum materials are piled up, the actual temperature of the aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Example 103)

In the same manner as in Example 101, an aluminum material with a purity of 99.99% rolled into 110 µm in thick was prepared. The obtained aluminum material was immersed in alkane series hydrocarbon for 2 seconds, dried in air at 90 °C for 1 minute, and then contact-heated in the air for 2 seconds by pinched by and between two sheets of stainless heating plates having a surface temperature of 200 °C. In a state in which the contact-heated aluminum materials are piled up, the actual temperature of the aluminum material was raised in an argon atmosphere from the room temperature to 560 °C at the rate of 50°C/h, and then held at 560 °C for 24 hours. Subsequently, the aluminum material was cooled and then brought out of the furnace. Thus, a high purity aluminum material for electrolytic capacitors was obtained.

### (Example 104)

In the same manner as in Example 101, an aluminum material with a purity of 99.99% rolled into 110 µm in thick was prepared. The obtained aluminum material was immersed in alkane series hydrocarbon for 2 seconds, dried in air at 90 °C for 1 minute, and then contact-heated in the air for 1 second by pinched by and between two sheets of stainless heating plates having a surface temperature of 200 °C. In a state in which the contact-heated aluminum materials are piled up, the actual temperature of the aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Example 105)

In the same manner as in Example 101, an aluminum material with a purity of 99.99% rolled into 110 µm in thick was prepared. The obtained aluminum material was immersed in alkane series hydrocarbon for 2 seconds, dried in air at 90 °C for 1 minute. Then, two heating rolls (each having a hard chrome plated surface) whose surface temperature was set to be 200°C were prepared. The front surface of the aluminum material was contacted with the first heating roll for 1 second to thereby perform the contact heating. Subsequently, the rear surface of the aluminum material was contacted with the second heating roll for 1 second to thereby perform the contact heating. In a state in which the contact-heated aluminum materials were piled up, the actual temperature of the aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Example 106)

In the same manner as in Example 101, an aluminum material with a purity of 99.99% rolled into 110 µm in thick was prepared. The obtained aluminum material was immersed in alkane series hydrocarbon for 2 seconds, dried in air at 90 °C for 1 minute, and then contact-heated in the air for 1 second by pinched by and between two sheets of stainless heating plates having a surface temperature of 90 °C. In a state in which the contact-heated aluminum materials were piled up, the actual temperature of the aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Example 107)

In the same manner as in Example 101, an aluminum material with a purity of 99.99% rolled into 110 µm in thick was prepared. The obtained aluminum material was immersed in alkane series hydrocarbon for 2 seconds, dried in air at 90 °C for 1 minute. Then, two heating rolls (each having a hard chrome plated surface) whose surface temperature was set to be 380 °C were prepared. The front surface of the aluminum material was contacted with the first heating roll for 0.1 second to thereby perform the contact heating. Subsequently, the rear surface of the aluminum material was contacted with the second heating roll for 0.1 second to thereby perform the contact heating. In a state in which the contact-heated aluminum materials were piled up, the actual temperature of the aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Example 108)

In the same manner as in Example 101, an aluminum material with a purity of 99.99% rolled into 110 µm in thick was prepared. The obtained aluminum material was immersed in alkane series hydrocarbon for 2 seconds, dried in air at 90 °C for 1 minute. Then, two heating rolls (each having a hard chrome plated surface) whose surface temperature was set to be 250°C were prepared. The front surface of the aluminum material was contacted with the first heating roll for 0.005 second to thereby perform the contact heating. Subsequently, the rear surface of the aluminum material was contacted with the second heating roll for 0.005 second to thereby perform the contact heating. In a state in which the contact-heated aluminum materials were piled up, the actual temperature of the aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Example 109)

In the same manner as in Example 101, an aluminum material with a purity of 99.99% rolled into 110 µm in thick was prepared. The obtained aluminum material was immersed in alkane series hydrocarbon for 2 seconds, dried in air at 90 °C for 1 minute, and then contact-heated in the air for 30 seconds by pinched by and between two sheets of stainless heating plates having a surface temperature of 150 °C. In a state in which the contact-heated aluminum materials were piled up, the actual temperature of the aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Example 110)

In the same manner as in Example 101, an aluminum material with a purity of 99.99% rolled into 110 µm in thick was prepared. The obtained aluminum material was immersed in alkane series hydrocarbon for 2 seconds, dried in air at 90 °C for 1 minute, and then contact-heated in the air for 2 seconds by pinched by and between two sheets of stainless heating plates having a surface temperature of 200 °C. In a state in which the contact-heated aluminum materials were piled up, the actual temperature of the aluminum material was raised in an argon atmosphere from the room temperature to 480 °C at the rate of 50°C/h, and then held at 480 °C for 24 hours. Subsequently, the aluminum material was cooled and then brought out of the furnace. Thus, a high purity aluminum material for electrolytic capacitors was obtained.

### (Example 111)

In the same manner as in Example 101, an aluminum material with a purity of 99.99% rolled into 110 µm in thickwas prepared. The obtained aluminum material was immersed in alkane series hydrocarbon for 2 seconds, dried in air at 90 °C for 1 minute, and then contact-heated in the air for 2 seconds by pinched by and between two sheets of stainless heating plates having a surface temperature of 200 °C. In a state in which the contact-heated aluminum materials were piled up, the actual temperature of the aluminum material was raised in an argon atmosphere from the room temperature to 580 °C at the rate of 50°C/h, and then held at 580 °C for 24 hours. Subsequently, the aluminum material was cooled and then brought out of the furnace. Thus, a high purity aluminum material for electrolytic capacitors was obtained.

### (Example 112)

In the same manner as in Example 101 except that the aluminum material was closely disposed between stainless plates having a surface temperature of 10 °C for 10 seconds, a high purity aluminum material for electrolytic capacitors was obtained.

### (Comparative Example 101)

In the same manner as in Example 101, an aluminum material with a purity of 99.99% rolled into 110 µm in thick was prepared. The obtained aluminum material was immersed in alkane series hydrocarbon for 2 seconds, dried in air at 90 °C for 1 minute. Then, in the piled state, the actual temperature of the aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Comparative Example 102)

In the same manner as in Example 101, an aluminum material with a purity of 99.99% rolled into 110 µm in thick was prepared. The obtained aluminum material was immersed in alkane series hydrocarbon for 2 seconds, dried in air at 90 °C for 1 minute. Then, in the piled state, the actual temperature of the aluminum material was raised in an argon atmosphere from the room temperature to 480 °C at the rate of 50°C/h, and then held at 480 °C for 24 hours. Subsequently, the aluminum material was cooled and then brought out of the furnace. Thus, a high purity aluminum material for electrolytic capacitors was obtained.

### (Comparative Example 103)

In the same manner as in Example 101, an aluminum material with a purity of 99.99% rolled into 110 µm in thick was prepared. The obtained aluminum material was immersed in alkane series hydrocarbon for 2 seconds, dried in air at 90 °C for 1 minute. Then, in the piled state, the actual temperature of the aluminum material was raised in an argon atmosphere from the room temperature to 580 °C at the rate of 50°C/h, and then held at 580 °C for 24 hours. Subsequently, the aluminum material was cooled and then brought out of the furnace. Thus, a high purity aluminum material for electrolytic capacitors was obtained.

Each aluminum material obtained in the aforementioned Examples and Comparative Examples was immersed in acid, and then subjected to electrolytic etching in hydrochloric acid-sulfuric acid aqueous solution. Thereafter, the aluminum material was immersed in acid aqueous solution to increase the pitch diameter to thereby obtain an etched foil. The obtained etched foil was subjected to formation at the voltage of 270 V in accordance with EIAJ standard to obtain a capacitance measuring sample.

The contact heating conditions, the actual temperature of the aluminum material at the time of the annealing, and the capacitance evaluations in each Example and Comparative Example are shown in Table 2. The capacitance evaluation is a relative value when Comparative Example 101 is 100).

**Table 2**

| | Contact heating conditions | | | Annealing actual temp. / °C | Capacitance evaluation (relative value when Comp. Example 1 is 100) |
|---|---|---|---|---|---|
| | Surface temp. of heating body /°C | Contact time /sec. | Heating body | | |
| Example 101 | 200 | 2 | Heating plate | 540 | 104 |
| Example 102 | 250 | 2 | Heating plate | 540 | 104 |
| Example 103 | 200 | 2 | Heating plate | 560 | 106 |
| Example 104 | 200 | 1 | Heating plate | 540 | 104 |
| Example 105 | 200 | 1 | Heating roll | 540 | 104 |
| Example 106 | 90 | 1 | Heating plate | 540 | 104 |
| Example 107 | 380 | 0.1 | Heating roll | 540 | 105 |
| Example 108 | 250 | 0.005 | Heating roll | 540 | 104 |
| Example 109 | 150 | 30 | Heating plate | 540 | 104 |
| Example 110 | 200 | 2 | Heating plate | 480 | 104 |
| Example 111 | 200 | 2 | Heating plate | 580 | 105 |
| Example 112 | 200 | 2 (Cooling after heating) | Heating plate | 540 | 105 |
| Comp. Ex. 101 | No contact heating | | | 540 | 100 |
| Comp. Ex. 102 | No contact heating | | | 480 | 96 |
| Comp. Ex. 103 | No contact heating | | | 580 | 100 |

As will be apparent from Table 2, in Examples, by performing the contact heating using heating plates or heating rolls before the annealing, the capacitance was increased as compared with Comparative Examples 101 to 103 in which no contact heating was performed.

### [Examples 113 to 230 and Comparative Example 104]

Washing solution in which organic solvent shown in Tables 3 and 4 and surfactant shown in Table 5 were added to water was prepared.

**Table 3**

| Washing liquid No. | Type | Liquid temp. (°C) |
|---|---|---|
| A1 | methanol (CH₃OH) | 25 |
| A2 | ethanol (C₂H₅OH) | 25 |
| A3 | 1-propanol (CH₃CH₂CH₂OH) | 25 |
| A4 | 2-propanol (CH₃CH₂(OH)CH₃) | 25 |
| A5 | 1-butanol (CH₃CH₂CH₂CH₂OH) | 25 |
| A6 | 2-butanol (CH₃CH₂CH₂(OH)CH₃) | 25 |
| A7 | 1-pentanol (CH₃CH₂CH₂CH₂CH₂OH) | 25 |
| A8 | 1-decanol (CH₃(CH₂)₉OH) | 25 |
| A9 | cycrohexanol (C₆H₁₁OH) | 25 |
| A10 | 1,2-ethanediol (HOCH₂CH₂OH) | 25 |
| A11 | 1,2-propanediol (CH₃CH(OH)CH₂OH) | 25 |
| A12 | 1,3-propanediol (HOCH₂CH₂CH₂OH) | 25 |
| A13 | pentane (C₅H₁₂) | 25 |
| A14 | octane (C₈H₁₈) | 25 |
| A15 | decane (C₁₀H₂₂) | 25 |
| A16 | pentadecane (C₁₅H₃₂) | 25 |
| A17 | cyclohexane (C₆H₁₂) | 25 |
| A18 | acetone (CH₃COCH₃) | 25 |
| A19 | 2-butanone (CH₃COC₂H₅) | 25 |
| A20 | 3-pentanone (C₂H₅COC₂H₅) | 25 |
| A21 | 3-methyl-2 butanone (CH₃COCH(CH₃)₂) | 25 |
| A22 | 5-nonanone (CH₃(CH₂)₃CO(CH₂)₃CH₃) | 25 |
| A23 | cyclohexanone (C₆H₁₀O) | 25 |
| A24 | ethoxyethane (C₂H₅OC₂H₅) | 25 |
| A25 | ethoxypropane (C₂H₅O(CH₂)₂CH₃) | 25 |
| A26 | butoxibutane (CH₃(CH₂)₃O(CH₂)₃CH₃) | 25 |
| A27 | 2-methoxyethanol (CH₃OCH₂CH₂OH) | 25 |
| A28 | 2-ethoxyethanol (CH₃CH₂OCH₂CH₂OH) | 25 |
| A29 | 2-butoxiethanol (CH₃CH₂CH₂CH₂OCH₂CH₂OH) | 25 |
| A30 | 2-(2-ethoxy)ethoxyethanol (CH₃CH₂OCH₂CH₂OCH₂CH₂OH) | 25 |

**Table 4**

| Washing liquid No. | Type | Liquid temp. (°C) |
|---|---|---|
| A31 | methyl acetate (CH₃COOH₃) | 25 |
| A32 | ethyl acetate (CH₃COOC₂H₅) | 25 |
| A33 | propyl acetate (CH₃COO(CH₂)₂CH₃) | 25 |
| A34 | butyl acetate (CH₃COO(CH₂)₃CH₃) | 25 |
| A35 | pentyl acetate (CH₃COO(CH₂)₄CH₃) | 25 |
| A36 | toluene (C₆H₅CH₃) | 25 |
| A37 | xylene (C₆H₄(CH₃)₂) | 25 |
| A38 | toluene: xylene=1:1 (Volume ratio) | 25 |
| A39 | toluene: xylene: 2- butanone=1:1:1 | 25 |
| A40 | kerosene | 25 |

**Table 5**

| Mark | Surfactant | Concentration of the surfactant (mol/l) | Liquid temp. (°C) |
|---|---|---|---|
| B1 | C₈H₁₇OSO₃Na (Octyl sodium sulfate) | 170×10⁻³ | 25 |
| B2 | C₁₀H₂₁OSO₃Na (decyl sodium sulfate) | 50×10⁻³ | 25 |
| B3 | C₁₂H₂₅OSO₃Na (dodecyl sodium sulfate) | 10×10⁻³ | 25 |
| B4 | C₁₆H₃₃OSO₃Na (hexadecyl sodium sulfate) | 0.8×10⁻³ | 25 |
| B5 | C₁₈H₃₇OSO₃Na (stearyl sodium sulfate) | 0.25×10⁻³ | 25 |
| B6 | C₁₈H₃₅OSO₃Na (oleyl sodium sulfate) | 0.4×10⁻³ | 25 |
| B7 | C₈H₁₇SO₃Na (octyl sulfonic acid sodium) | 200×10⁻³ | 25 |
| B8 | C₁₀H₂₁SO₃Na (decyl sulfonic acid sodium) | 60×10⁻³ | 25 |
| B9 | C₁₂H₂₅SO₃Na (dodecyl sulfonic acid sodium) | 15×10⁻³ | 25 |
| B10 | C₁₆H₃₃SO₃Na (hexadecyl sulfonic acid sodium) | 1.5×10⁻³ | 25 |
| B11 | C₁₈H₃₇SO₃Na (stearyl sulfonic acid sodium) | 1.3×10⁻³ | 25 |
| B12 | C₁₈H₃₅SO₃Na (oleyl sulfonic acid sodium) | 2×10⁻³ | 25 |
| B13 | C₈H₁₇₋C₆H₄-SO₃Na (octa benzene sulfonic acid sodium) | 15×10⁻³ | 25 |
| B14 | C₁₀H₂₁₋C₆H₄₋SO₃Na (decyl benzene sulfonic acid sodium) | 5×10⁻³ | 25 |
| B15 | C₁₂H₂₅₋C₆H₄₋SO₃Na (dodecyl benzene sulfonic acid sodium) | 1.7×10⁻³ | 25 |
| B16 | C₁₄H₂₉₋C₆H₄₋SO₃Na (tetradecyl benzene sulfonic acid sodium) | 1×10⁻³ | 25 |
| B17 | C₁₀H₂₁-N⁺(CH₃)₃·Cl⁻(decyl trimethylammonium chloride) | 200×10⁻³ | 25 |
| B18 | C₁₂H₂₅N⁺(CH₃)₃·Cl⁻ (dodecyltrimethylammonium chloride) | 25×10⁻³ | 25 |
| B19 | C₁₆H₃₃⁺(CH₃)₃·Cl⁻ (hexadecyl trimethylammonium chloride) | 2×10⁻³ | 25 |
| B20 | octanol EO 6 mol affixture (C₈H₁₇O(CH₂CH₂O)₆H) | 150×10⁻³ | 25 |
| B21 | dodecanol EO 6 mol affixture (C₁₂H₂₅O(CH₂CH₂O)₆H) | 12×10⁻³ | 25 |
| B22 | hexadecanol EO 6 mol affixture (C₁₆H₃₃O(CH₂CH₂O)₆H) | 2×10⁻³ | 25 |
| B23 | dodecanol EO 10 mol affixture (C₁₂H₂₅O(CH₂CH₂O)₁₀H) | 16×10⁻³ | 25 |
| B24 | dodecanol EO 14 mol affixture (C₁₂H₂₅O(CH₂CH₂O)₁₄H) | 25×10⁻³ | 25 |
| B25 | octyl phenol EO 10 mol affixture (C₈H₁₇-C₆H₄-O(CH₂CH₂O)₁₀H) | 12×10⁻³ | 25 |
| B26 | nonyl phenol EO 10 mol affixture (C₉H₁₉-C₆H₄-O(CH₂CH₂O)₁₀H) . | 8×10⁻³ | 25 |
| B27 | dodecylphenol EO 10 mol affixture (C₁₂H₂₅-C₆H₄-O(CH₂CH₂O)₁₀H) | 2×10⁻³ | 25 |
| B28 | nonyl phenol EO 6 mol affixture (C₉H₁₉-C₆H₄-O(CH₂CH₂O)₆H) | 7×10⁻³ | 25 |
| B29 | nonyl phenol EO 14 mol affixture (C₉H₁₉-C₆H₄-O(CH₂CH₂O)₁₄H) | 15×10⁻³ | 25 |

### (Example 113)

An aluminum material with a purity of 99.99% rolled into 110 µ m in thick was immersed in the A1 solution shown Table 3 for 2 seconds, and dried in air at 90 °C for 60 seconds. Then, the aluminum material was pinched by two sheets of stainless heating plates having a surface temperature of 200 °C to perform the contact heating for 2 seconds.

Subsequently, in the piled state, the actual temperature of the contact heated aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Examples 114 to 188)

An aluminum material with a purity of 99.99% rolled into 110 µ m in thick, which was the same aluminum material as in Example 113, was washed and dried under the conditions of the steps shown in Tables 6 to 9. Then, the aluminum material was pinched by and between two sheets of stainless heating plates having a surface temperature of 200 °C to perform the contact heating for 2 seconds. In Examples 253 to 282, the aluminum material was contacted by and rubbed with a brush when the aluminum material was immersed in the washing solution.

Subsequently, in the piled state, the actual temperature of the contact heated aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Examples 189 to 196)

An aluminum material with a purity of 99.99% rolled into 110 µ m in thick, which was the same aluminum material as in Example 113, was pinched by and between two sheets of stainless heating plates having a surface temperature of 200 °C to perform the contact heating for 2 seconds.

Subsequently, the aluminum material was washed and dried under the conditions of the step 3 shown in Table 8. The aluminum material was contacted by and rubbed with a brush when the aluminum material was immersed in the washing solution.

In the piled state, the actual temperature of the contact heated aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Examples 197 to 202)

An aluminum material with a purity of 99.99% rolled into 110 µ m in thick, which was the same aluminum material as in Example 113, was washed and dried under the conditions of the step 1 shown in Table 8. Then, the aluminum material was pinched by and between two sheets of stainless heating plates having a surface temperature of 200 °C to perform the contact heating for 2 seconds. The contact heated aluminum material was washed and dried under the conditions of the Step 3 shown in Table 8.

Under the conditions in Step 3, in the piled state, the actual temperature of the contact heated aluminum material was raised in an argon atmosphere from the room temperature to 540 °C at the rate of 50°C /h, and then held at 540 °C for 24 hours. Subsequently, the aluminum material was cooled and then brought out of the furnace. Thus, a high purity aluminum material for electrolytic capacitors was obtained.

### (Examples 203 to 207)

An aluminum material with a purity of 99.99% rolled into 110 µ m in thick, which was the same aluminum material as in Example 113, was washed and dried under the conditions of the steps shown in Table 8. Then, the aluminum material was pinched by and between two sheets of stainless heating plates having a surface temperature of 200 °C to perform the contact heating for 2 seconds.

In the piled state, the actual temperature of the contact heated aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Examples 208 to 211)

An aluminum material with a purity of 99.99% rolled into 110 µ m in thick, which was the same aluminum material as in Example 113, was pinched by and between two sheets of stainless heating plates having a surface temperature of 200 °C to perform the contact heating for 2 seconds. Subsequently, the aluminum material was washed and dried under the conditions of the step 3 shown in Tables 9 and 10. The aluminum material was contacted by and rubbed with a brush when the aluminum material was immersed in the washing solution.

In the piled state, the actual temperature of the contact heated aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Examples 212 to 228)

An aluminum material with a purity of 99.99% rolled into 110 µ m in thick, which was the same aluminum material as in Example 113, was washed and dried under the conditions of the step 1 shown in Table 10, and was subjected to the contact heating under the conditions of Step 2 in Table 9.

Then, in the piled state, the actual temperature of the contact heated aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Example 229)

An aluminum material with a purity of 99.99% rolled into 110 µ m in thick, which was the same aluminum material as in Example 113, was pinched by and between two sheets of stainless heating plates having a surface temperature of 200 °C to perform the contact heating for 2 seconds. In the piled state, the actual temperature of the contact heated aluminum material was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

### (Example 230)

In the same manner as in Example 224 except that the aluminum material was brought into contact with cooling rolls having a surface temperature of 25 °C after the contact heating with the heating rolls, a high purity aluminum material for electrolytic capacitors was obtained.

### (Comparative Example 104)

The actual temperature of an aluminum material with a purity of 99.99% rolled into 110 µm in thick, which was the same aluminum material as in Example 113, was raised in an argon atmosphere from the room temperature to 540 °C at the rate of 50°C/h, and then held at 540 °C for 24 hours. Subsequently, the aluminum material was cooled and then brought out of the furnace. Thus, a high purity aluminum material for electrolytic capacitors was obtained.

Each aluminum material obtained in the aforementioned Examples 113 to 230 and Comparative Example 104 was immersed in an aqueous solution containing HCl 1.0 mol·dm⁻³ and H₂SO₄ 3.5 mol·dm⁻³ and having a liquid temperature of 75 °C, then subjected to electrolytic etching at the current density of 0.2 A/m². The electrolytically etched aluminum material was further immersed in a hydrochloric acid-sulfuric acid aqueous solution having the same compositions as mentioned above at 90 °C for 360 seconds to increase the pit diameter to thereby obtain an etched foil. The obtained etched foil was subjected to formation at the voltage of 270 V in accordance with EIAJ standard to obtain a capacitance measuring sample. The measured capacitance of each sample is shown in Tables 6 to 10 as a relative value when Comparative Example 104 is 100.

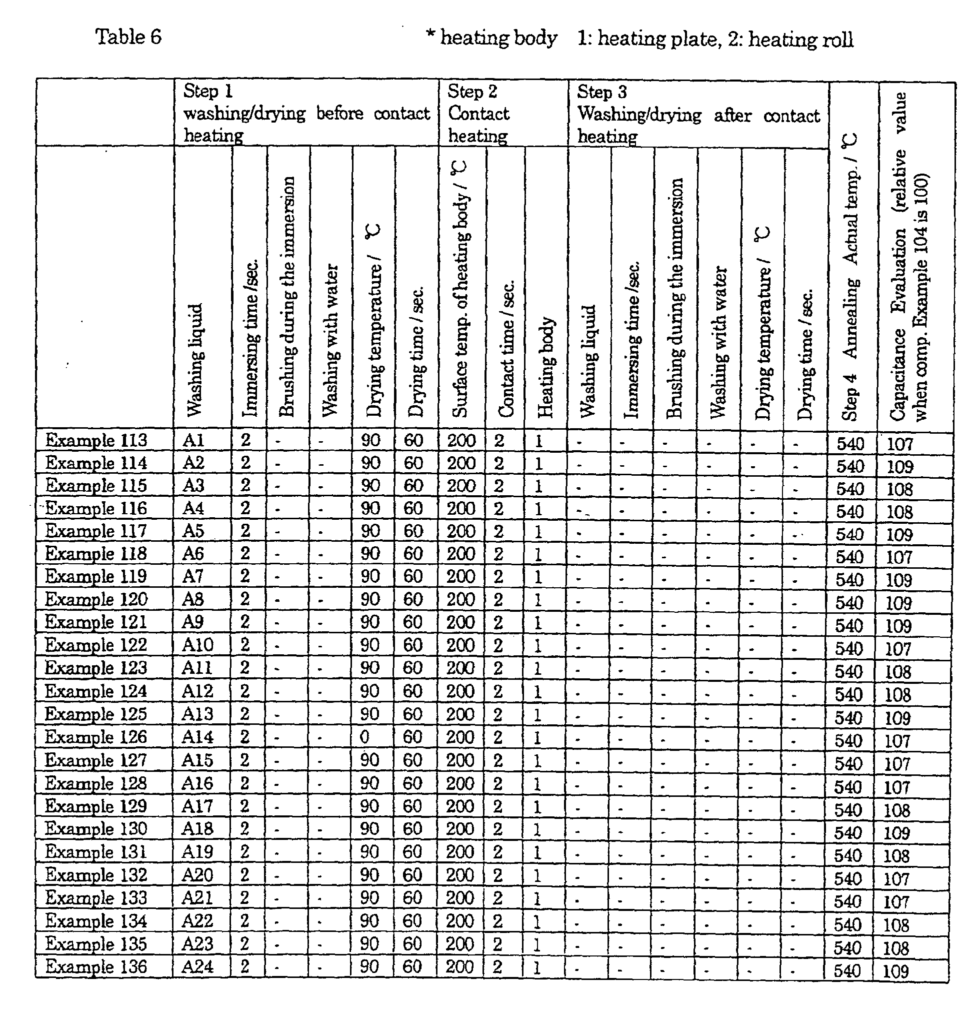

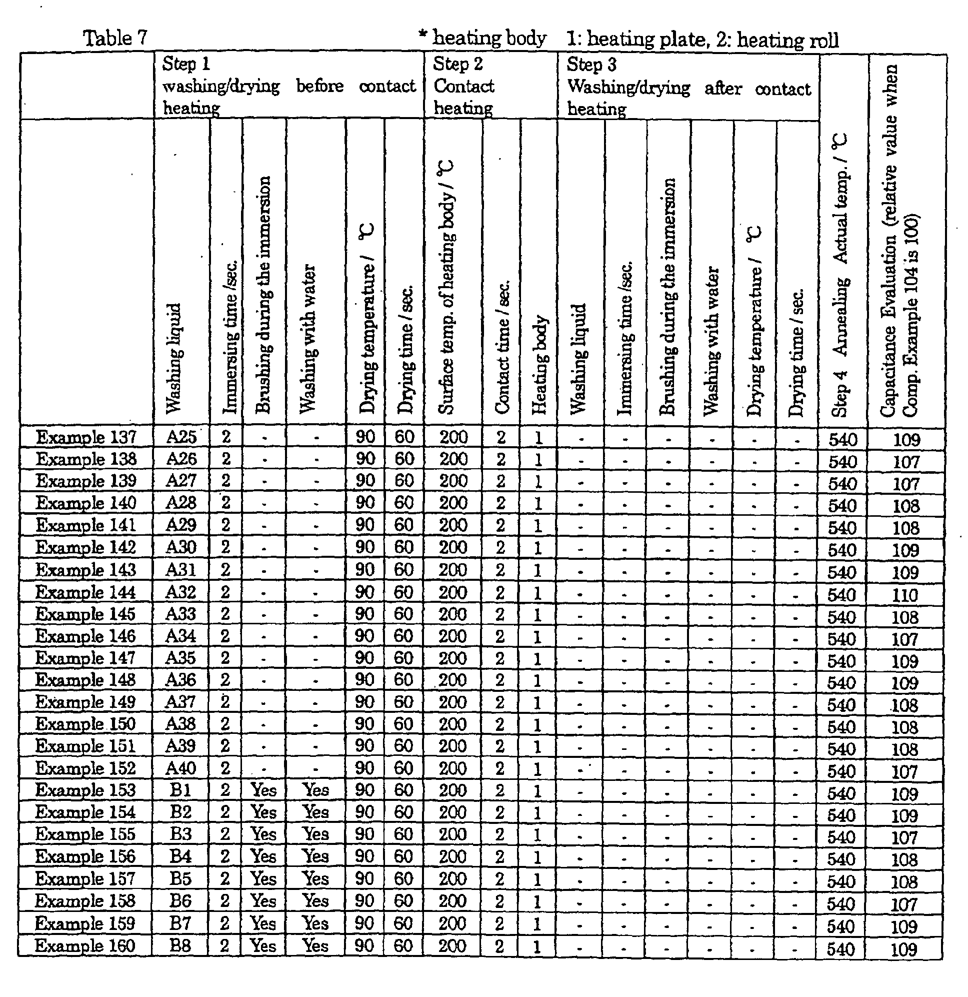

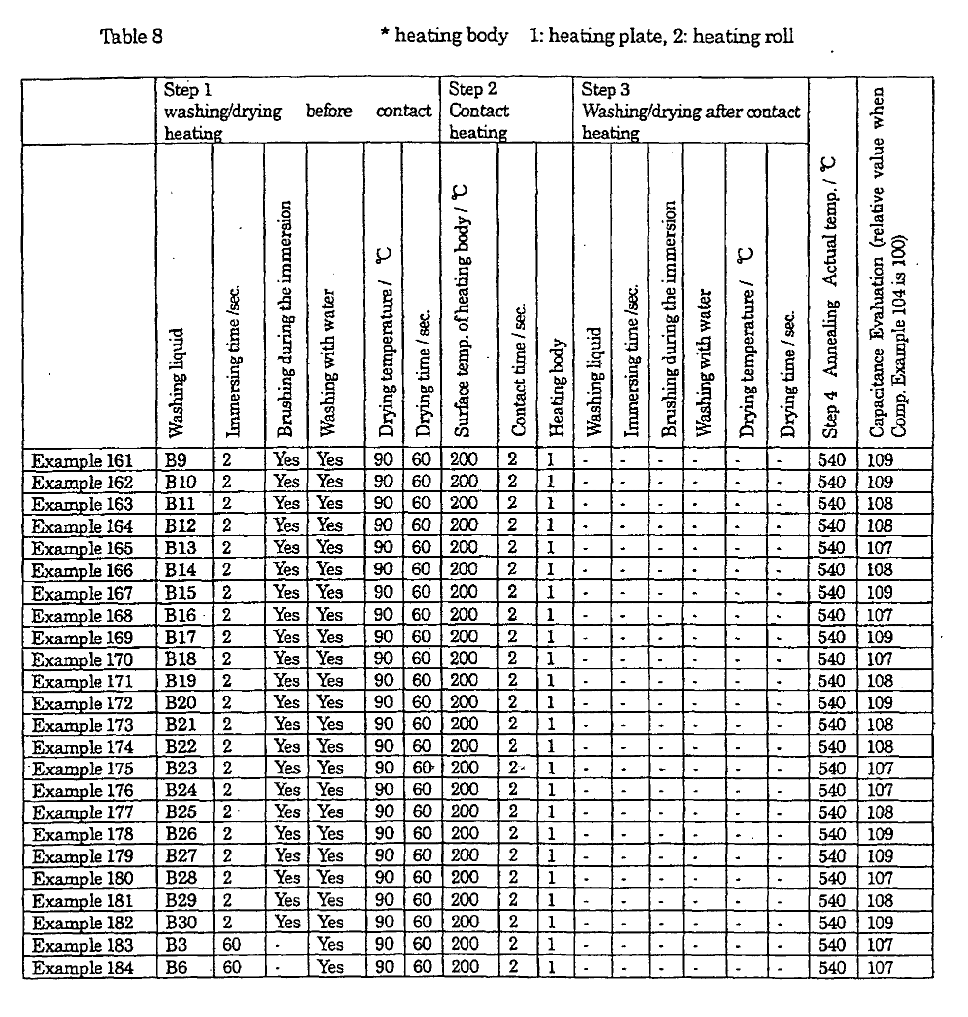

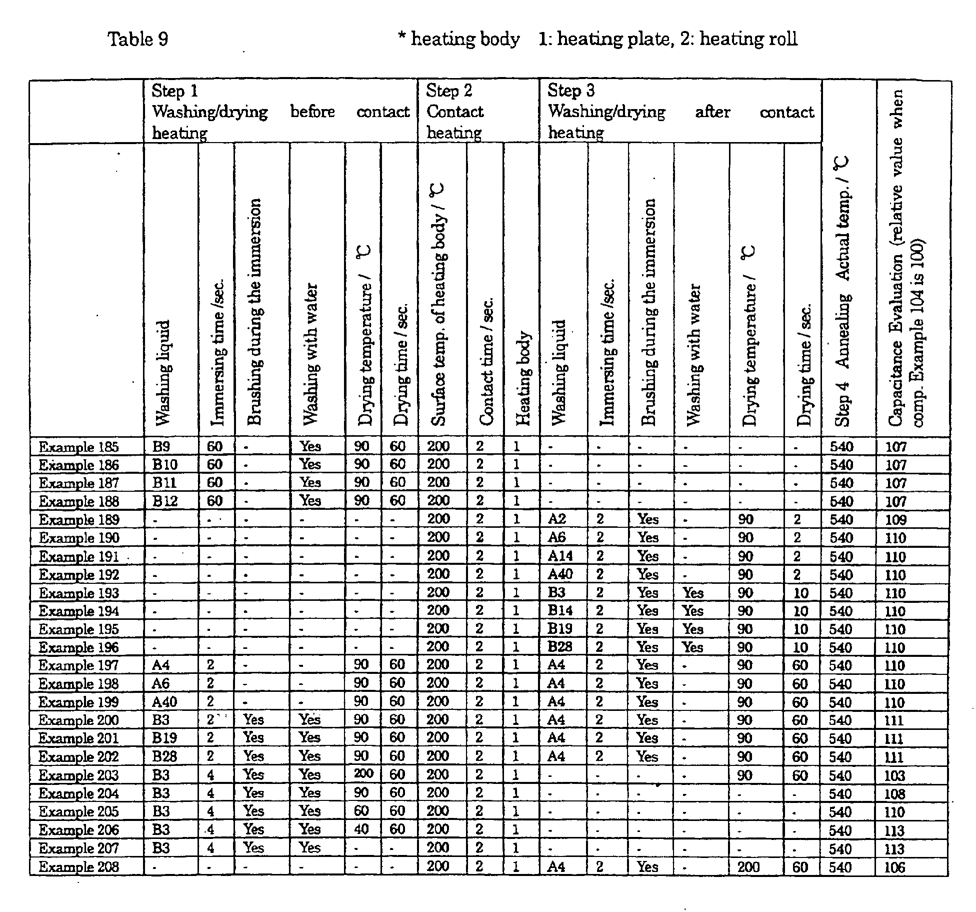

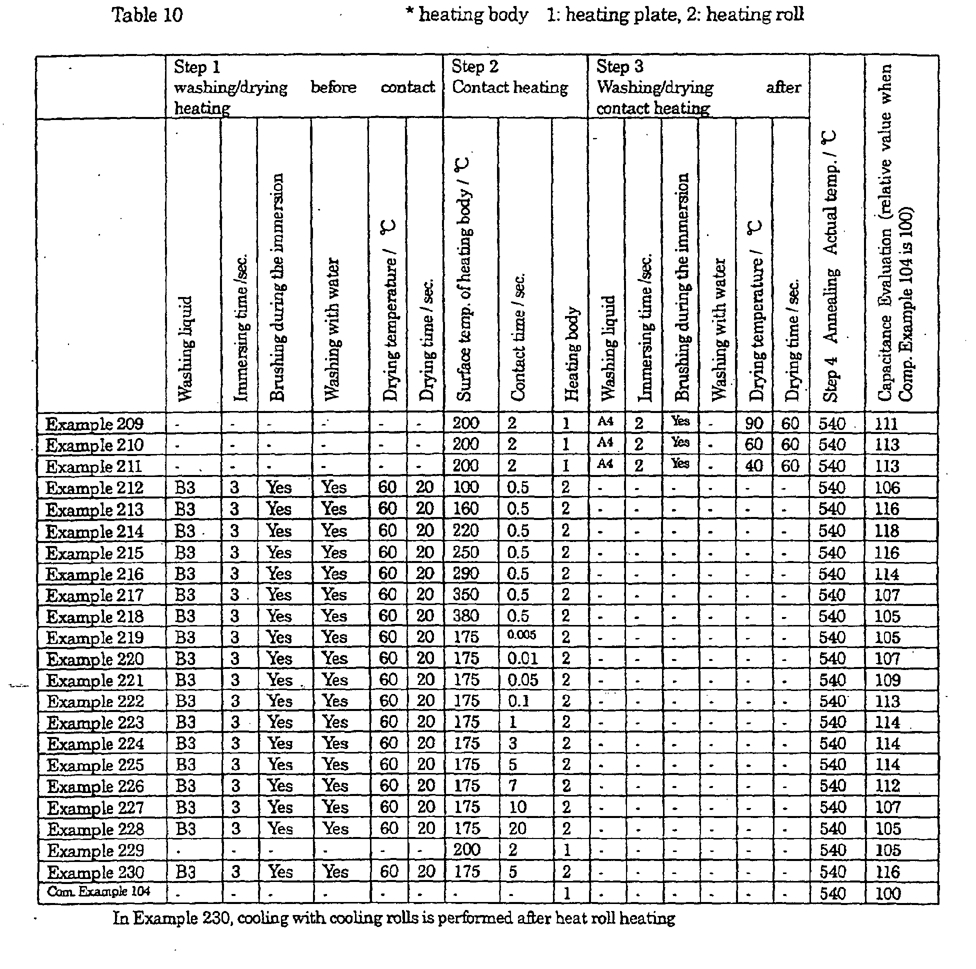

From the comparison between Example 229 and Comparative Example 104 in Table 10, it is confirmed that performing the contact heating before the final annealing increases capacitance. Furthermore, from the comparison between Examples 113 to 211 and Example 229, it is confirmed that performing the washing either before or after the contact heating further increases the capacitance.

Furthermore, from Examples 203 to 211, when the drying temperature after the washing is 200 °C or below, capacitance increases, when it is below 90 °C, the capacitance further increases.

### [Third Example]

This example corresponds to the third embodiment.

Organic solutions for organic solvent washing to be performed before alkali washing or acid washing of the aluminum material after the final rolling are shown in Table 11, the alkali washing solutions are shown in Table 12, and the acid washing solutions are shown in Table 13.

**Table 11**

| organic solvent washing liquid | | |
|---|---|---|
| Mark | organic solvent | Liquid temp. (°C) |
| A101 | acetone | 25 |
| A102 | n-hexane | 25 |
| A103 | 2- propanol | 25 |

**Table 12**

| Type of alkali washing liquid (aqueous solution) | | | |
|---|---|---|---|
| Mark | Type of alkali | Concentration / mass% | Liquid temp. (°C) |
| B101 | sodium hydroxide | 0.1 | 35 |
| B102 | potassium hydroxide | 0.1 | 35 |
| B103 | calcium hydroxide | 0.1 | 35 |
| B104 | sodium metasilicate | 0.2 | 35 |
| B105 | sodium orthosilicate | 0.2 | 35 |
| B106 | sodium orthosilicate | 0.2 | 50 |
| B107 | sodium tertiary phosphate | 0.2 | 50 |

**Table 13**

| Type of acid washing liquid (aqueous solution) | | | |
|---|---|---|---|
| Mark | Type of acid | Concentration / mass% | Liquid temp. (°C) |
| C101 | hydrochloric acid | 3 | 30 |
| C102 | sulfuric acid | 3 | 30 |
| C103 | nitric acid | 3 | 30 |
| C104 | phosphoric acid | 3 | 30 |
| C105 | nitric acid | 3 | 50 |

### (Example 301)

An aluminum foil (aluminum material) with a purity of 99.99% rolled into 110 µm in thick was subjected to washing with A102 liquid in Table 11, drying, washing with B106 in Table 12 for 40 seconds, washing with water, drying, washing with C101 liquid in Table 13 for 60 seconds, washing with water, and drying in order.

Then, the aluminum material was pinched by two sheets of stainless heating plates having a surface temperature of 250 °C to perform the contact heating for 2 seconds.

Subsequently, in the piled state, the actual temperature of the contact heated aluminum material was raised in an argon atmosphere from the room temperature to 500 °C at the rate of 50°C/h, and then held at 500 °C for 24 hours. Subsequently, the aluminum material was cooled and then brought out of the furnace. Thus, a high purity aluminum material for electrolytic capacitors was obtained.

### (Examples 302 to 349)

An aluminum foil with a purity of 99.99% rolled into 110 µm in thick, which was the same in Example 301, was subjected to washing and drying under the conditions in Table 14 or 15, and then subjected to the contact heating under the conditions of Table 4 or 5.

After the organic solvent washing, drying was performed. After the acid washing and alkali washing, washing with water was performed. Further, in Examples 341, 343 and 344, a heating roll having a chrome plated surface was used as a heating body.

Subsequently, in the piled state, the actual temperature of the contact heated aluminum material was raised in an argon atmosphere from the room temperature to the annealing actual temperature shown in Table 14 or 15 at the rate of 50°C/h, and then held at the annealing actual temperature for 24 hours. Subsequently, the aluminum material was cooled and then brought out of the furnace. Thus, a high purity aluminum material for electrolytic capacitors was obtained.

### (Comparative Example 301 to 304)

An aluminum foil with a purity of 99.99% rolled into 110 µm in thick, which was the same as in Example 301, was subjected to washing with A101 liquid in Table 11, drying, washing with B105 in Table 2 for 40 seconds, and drying in order under the conditions in Table 15.

Then, without performing the contact heating, in the piled state, the actual temperature of the contact heated aluminum material was raised in an argon atmosphere from the room temperature to the annealing actual temperature shown in Table 5 at the rate of 50°C/h, and then held at the annealing actual temperature for 24 hours. Subsequently, the aluminum material was cooled and then brought out of the furnace. Thus, a high purity aluminum material for electrolytic capacitors was obtained.

Each aluminum foil obtained in the aforementioned Examples and Comparative Examples was immersed in an aqueous solution containing HCl 1. 0 mol·dm⁻³ and H₂SO₄ 3.5 mol·dm⁻³ and having a liquid temperature of 75 °C, then subjected to electrolytic etching at the current density of 0.2 A/m². The electrolytically etched aluminum foil was further immersed in a hydrochloric acid-sulfuric acid aqueous solution having the same compositions as mentioned above at 90 °C for 360 seconds to increase the pit diameter to thereby obtain an etched foil.

The obtained etched foil was subjected to formation at the formation voltage of 270 V in accordance with EIAJ standard to make an anodic material to thereby obtain a capacitance measuring sample. The measured capacitance of each sample is shown in Tables 14 and 15 as a relative value when Comparative Example 301 is 100.

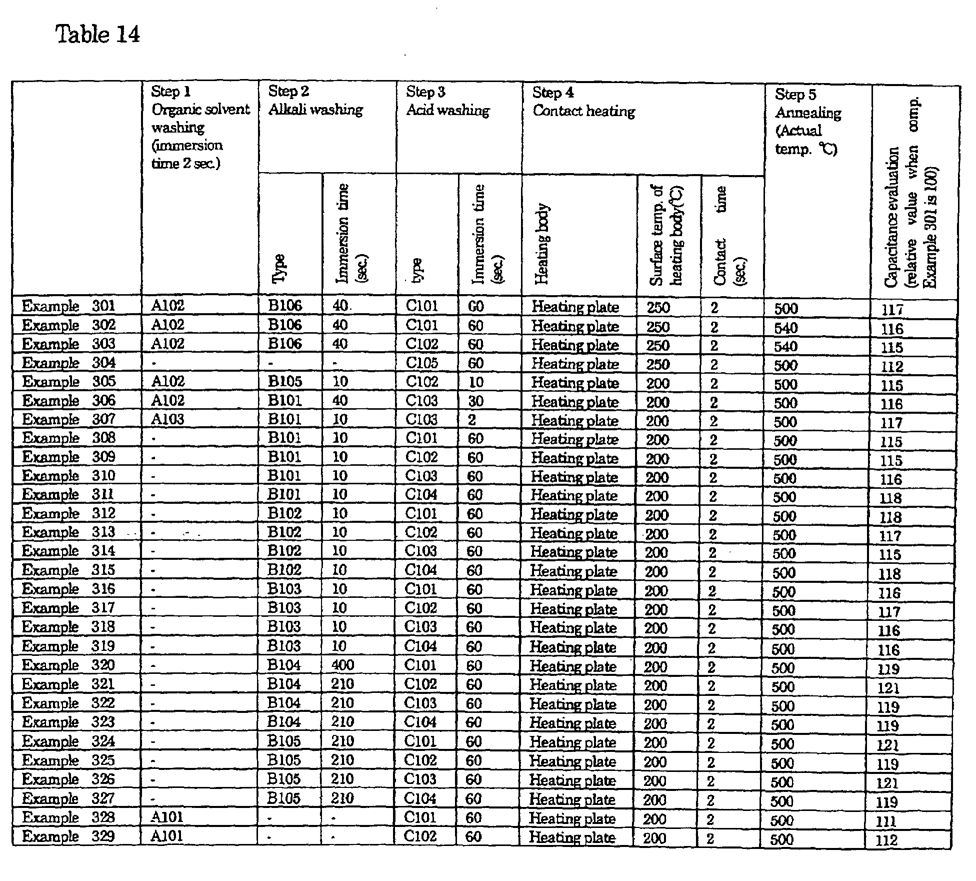

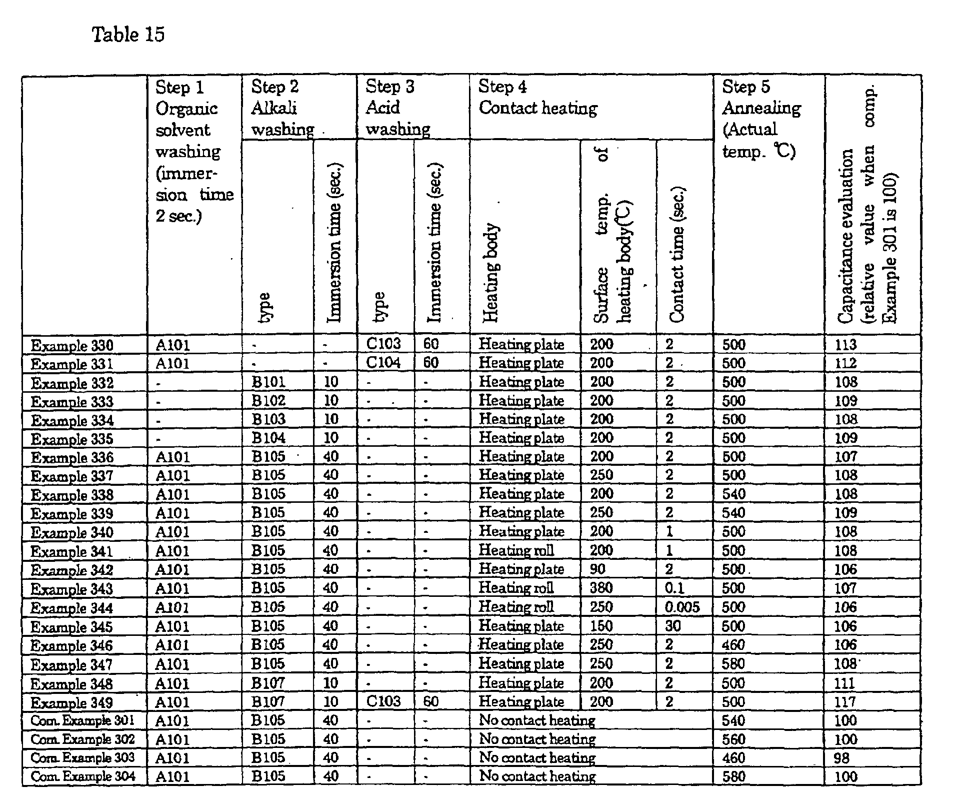

As will be understood from the above Tables, according to the embodiments of the present invention, performing the contact heating after the alkali washing and/or the acid washing increases capacitance as compared with the case where no contact heating is performed.

### [Fourth Embodiment]

This embodiment corresponds to the fourth embodiment.

### (Example 401)

An aluminum material with a purity of 99.99% rolled into 110 µ m in thick was immersed in a 0.1 mass% sodium hydroxide aqueous solution having a temperature of 35 °C for 10 seconds, and then washed with water. Subsequently, in the piled state, the actual temperature of the aluminum material was raised in an argon atmosphere from the room temperature to 540 °C at the rate of 50°C/h, and then held at 540 °C for 4 hours. Subsequently, the aluminum material was cooled and then brought out of the furnace. Then, the aluminum material was pinched by two sheets of stainless heating plates having a surface temperature of 200 °C to perform the contact heating for 2 seconds. Thus, a high purity aluminum material for electrolytic capacitors was obtained.

### (Example 402)

In the same manner as in Example 401 except that the surface temperature of the heating plate is 80°C and the contact time to the heating body is 28 seconds, an aluminum material for electrolytic capacitor electrodes was obtained.

### (Example 403)

In the same manner as in Example 401 except that the surface temperature of the heating plate is 100°C and the contact time to the heating body is 20 seconds, an aluminum material for electrolytic capacitor electrodes was obtained.

### (Example 404)

In the same manner as in Example 401 except that the surface temperature of the heating plate is 160°C and the contact time to the heating body is 10 seconds, an aluminum material for electrolytic capacitor electrodes was obtained.

### (Example 405)

In the same manner as in Example 401 except that the surface temperature of the heating plate is 290°C and the contact time to the heating body is 2 seconds, an aluminum material for electrolytic capacitor electrodes was obtained.

### (Example 406)

An aluminum material with a purity of 99.99% rolled into 110 µ m in thick was immersed in a 0.1 mass% sodium hydroxide aqueous solution having a temperature of 35 °C for 10 seconds, and then washed with water and dried. Subsequently, in the piled state, the actual temperature of the aluminum material was raised in an argon atmosphere from the room temperature to 500 °C at the rate of 50°C/h, and then held at 500 °C for 4 hours. Subsequently, the aluminum material was cooled and then brought out of the furnace. Then, the aluminum material was pinched by two sheets of stainless heating plates having a surface temperature of 200 °C to perform the contact heating for 3 seconds. Thus, a high purity aluminum material for electrolytic capacitors was obtained.

### (Example 407)

An aluminum material with a purity of 99.99% rolled into 110 µ m in thick was immersed in a 0.1 mass% sodium hydroxide aqueous solution having a temperature of 35 °C for 10 seconds, and then washed with water and dried. Subsequently, in the piled state, the actual temperature of the aluminum material was raised in an argon atmosphere from the room temperature to 470 °C at the rate of 50°C/h, and then held at 470 °C for 4 hours. Subsequently, the aluminum material was cooled and then brought out of the furnace. Then, the aluminum material was pinched by two sheets of stainless heating plates having a surface temperature of 200 °C to perform the contact heating for 15 seconds. Thus, a high purity aluminum material for electrolytic capacitors was obtained.

### (Example 408)

An aluminum material with a purity of 99.99% rolled into 110 µ m in thick was immersed in a 0.1 mass% sodium hydroxide aqueous solution having a temperature of 35 °C for 10 seconds, and then washed with water and dried. Subsequently, in the piled state, the actual temperature of the aluminum material was raised in an argon atmosphere from the room temperature to 560 °C at the rate of 50°C/h, and then held at 560 °C for 4 hours. Subsequently, the aluminum material was cooled and then brought out of the furnace. Then, the aluminum material was pinched by two sheets of stainless heating plates having a surface temperature of 200 °C to perform the contact heating for 2 seconds. Thus, a high purity aluminum material for electrolytic capacitors was obtained.

### (Example 409)

An aluminum material with a purity of 99.99% rolled into 110 µ m in thick was immersed in a 0.1 mass% sodium hydroxide aqueous solution having a temperature of 35 °C for 10 seconds, and then washed with water and dried. Subsequently, in the piled state, the actual temperature of the aluminum material was raised in an argon atmosphere from the room temperature to 540 °C at the rate of 50°C/h, and then held at 540 °C for 4 hours. Subsequently, the aluminum material was cooled and then brought out of the furnace. Then, the aluminum material was brought into contact with a heating roll having a surface temperature of 350 °C to perform the contact heating for 0.01 seconds. Thus, a high purity aluminum material for electrolytic capacitors was obtained.

### (Example 410)

An aluminum material with a purity of 99.99% rolled into 110 µ m in thick was immersed in a 0.1 mass% sodium hydroxide aqueous solution having a temperature of 35 °C for 10 seconds, and then washed with water and dried. Subsequently, in the piled state, the actual temperature of the aluminum material was raised in an argon atmosphere from the room temperature to 500 °C at the rate of 50°C/h, and then held at 500 °C for 4 hours. Subsequently, the aluminum material was cooled and then brought out of the furnace. Then, the aluminum material was brought into contact with a heating roll having a surface temperature of 380 °C to perform the contact heating for 0.01 seconds. Thus, a high purity aluminum material for electrolytic capacitors was obtained.

### (Example 411)

In the same manner as in Example 410 except that the surface temperature of the heating roll is 200°C and the contact time to the heating roll is 0.05 seconds, an aluminum material for electrolytic capacitor electrodes was obtained.

### (Example 412)

An aluminum material with a purity of 99.99% rolled into 110 µ m in thick was immersed in a 0.1 mass% sodium hydroxide aqueous solution having a temperature of 35 °C for 10 seconds, and then washed with water and dried. Subsequently, in the piled state, the actual temperature of the aluminum material was raised in an argon atmosphere from the room temperature to 520 °C at the rate of 50°C/h, and then held at 520 °C for 4 hours. Subsequently, the aluminum material was cooled and then brought out of the furnace. Then, the aluminum material was brought into contact with a heating roll having a surface temperature of 200 °C to perform the contact heating for 0.1 seconds. Thus, a high purity aluminum material for electrolytic capacitors was obtained.

### (Example 413)

An aluminum material with a purity of 99.99% rolled into 110 µ m in thick was immersed in a 0.1 mass% sodium hydroxide aqueous solution having a temperature of 35 °C for 10 seconds, and then washed with water and dried. Subsequently, in the piled state, the actual temperature of the aluminum material was raised in an argon atmosphere from the room temperature to 500 °C at the rate of 50°C/h, and then held at 500 °C for 4 hours. Subsequently, the aluminum material was cooled and then brought out of the furnace. Then, the aluminum material was brought into contact with a heating roll having a surface temperature of 200 °C to perform the contact heating for 2 seconds and then brought into contact with a cooling roll having a surface temperature of 30 °C. Thus, a high purity aluminum material for electrolytic capacitors was obtained.

### (Comparative Example 401)

In the same manner as in Example 410 except that the contact heating was not performed, an aluminum material for electrolytic capacitor electrodes was obtained.

Each aluminum foil obtained in the aforementioned Examples 401 to 413 and Comparative Example 401 was immersed in an aqueous solution containing HCl 1.0 mol/l and H₂SO₄ 3.5 mol/l and having a liquid temperature of 75 °C, then subjected to electrolytic etching at the current density of 0. 2 A/m². The electrolytically etched aluminum foil was further immersed in a hydrochloric acid-sulfuric acid aqueous solution having the same compositions as mentioned above at 90 °C for 360 seconds to increase the pit diameter to thereby obtain an etched foil.

The obtained etched foil was subjected to formation at the voltage of 270 V in accordance with EIAJ standard to make an anodic material to thereby obtain a capacitance measuring sample. The measured capacitance of each sample is shown in Table 16 as a relative value when Comparative Example 401 is 100.

**Table 16**

| | Annealing actual temp. / °C | Contact heating conditions | | | Capacitance evaluation (relative value when comp. example 401 is 100) |
|---|---|---|---|---|---|
| | | Surface temp. of heating body /°C | Contact time /sec. | Heating body | |
| Example 401 | 540 | 200 | 2 | Heating plate | 108 |
| Example 402 | 540 | 80 | 28 | Heating plate | 103 |
| Example 403 | 540 | 100 | 20 | Heating plate | 104 |
| Example 404 | 540 | 160 | 10 | Heating plate | 106 |
| Example 405 | 540 | 290 | 2 | Heating plate | 107 |
| Example 406 | 500 | 200 | 3 | Heating plate | 106 |
| Example 407 | 470 | 200 | 15 | Heating plate | 102 |
| Example 408 | 560 | 200 | 2 | Heating plate | 106 |
| Example 409 | 540 | 350 | 0.01 | Heating roll | 104 |
| Example 410 | 500 | 380 | 0.01 | Heating roll | 103 |
| Example 411 | 500 | 200 | 0.05 | Heating roll | 106 |
| Example 412 | 520 | 200 | 0.1 | Heating roll | 107 |
| Example 413 | 500 | 200 | 2 | Heating roll(*) | 107 |
| Com. Example 401 | 540 | No contact heating | | | 100 |

| | | | | | |
|---|---|---|---|---|---|
| * After heating with a heating roll, cooling rolls having a surface temperature of 30°C come into contact with the aluminum material. | | | | | |

From the comparison between the aforementioned Examples and Comparative Examples, it is understood that performing the contact heating after the final annealing can increase capacitance.

### INDUSTRIAL APPLICABILITY

The present invention can be used as a method for manufacturing an aluminum material for electrolytic capacitors, an aluminum material for electrolytic capacitor electrodes, a method for manufacturing an electrode material for electrolytic capacitors, and an aluminum electrolytic capacitor.

## Claims

1. A method of manufacturing an aluminum material for electrolytic capacitor electrodes, the method comprising, in manufacturing an aluminum material for electrolytic capacitor electrodes by subjecting an aluminum slab to hot rolling, cold rolling and final annealing, a contact heating step for heating the aluminum material is performed by bringing the aluminum material into contact with a heating body after the hot rolling.

2. The method of manufacturing an aluminum material for electrolytic capacitor electrodes as recited in claim 1, wherein the contact heating step for heating the aluminum material with the heating body is performed at least once between a start of the cold rolling and a completion thereof.

3. The method of manufacturing an aluminum material for electrolytic capacitor electrodes as recited in claim 2, wherein a rolling reduction ratio of the aluminum material after the contact heating step is 60% or less, wherein the roll reduction ratio is represented by [(A-B)/A]x100(%), where "A" (µm) is a thickness of the aluminum material after the last contact heating among the contact heating performed at least once during the cold rolling but before the resumption of the cold rolling, and "B"(µm) is a thickness of the aluminum material after the entire cold rolling.

4. The method of manufacturing an aluminum material for electrolytic capacitor electrodes as recited in claim 3, wherein the roll reduction ratio after the contact heating is 30% or less.

5. The method of manufacturing an aluminum material for electrolytic capacitor electrodes as recited in claim 1, wherein the contact heating step for heating the aluminum material with the heating body is performed after the cold rolling but before the final annealing.

6. The method of manufacturing an aluminum material for electrolytic capacitor electrodes as recited in claim 5, further comprising a washing step for washing the aluminum material performed before or after the contact heating step.

7. The method of manufacturing an aluminum material for electrolytic capacitor electrodes as recited in claim 5, wherein the aluminum material is washed before the contact with the heating body, then dried or not dried, and thereafter heated by bringing the aluminum material into contact with the heating body.

8. The method of manufacturing an aluminum material for electrolytic capacitor electrodes as recited in claim 5, wherein the aluminum material is washed after the contact with the heating body, then dried or not dried, and thereafter annealed.

9. The method of manufacturing an aluminum material for electrolytic capacitor electrodes as recited in any one of claims 5 to 8, wherein washing liquid for washing the aluminum material is organic solvent.

10. The method of manufacturing an aluminum material for electrolytic capacitor electrodes as recited in claim 9, wherein the organic solvent is one element or a mixture of two or more elements selected from the group consisting of alcohol represented by CₙH₂ₙ₊₁OH(n(integer)=1∼10), cyclohexanol (C₆H₁₁OH), 1,2-ethanediol (HOCH₂CH₂OH), 1,2-propanediol (CH₃CH(OH)CH₂OH), 1,3-propanediol (HOCH₂CH₂CH₂OH), alkane series hydrocarbon represented by CₙH₂ₙ₊₂ (n(integer)=5∼15), cyclohexane, ketone represented by R¹COR² (R¹ and R²: aliphatic hydrocarbon radical, the total carbon number of R¹ and R² is 8 or less), cyclohexanone (C₆H₁₀O), ether represented by R¹-O-R² (R¹ and R²: aliphatic hydrocarbon group, the total carbon number of R¹ and R² is 8 or less), 2-methoxy ethanol (CH₃OCH₂CH₂OH), 2-etoxiethanol (CH₃CH₂OCH₂CH₂OH), 2-butoxiethanol (CH₃CH₂CH₂CH₂OCH₂CH₂OH), 2-(2-etoxi)etoxiethanol (CH₃CH₂OCH₂CH₂OCH₂CH₂OH), ethyl acetate represented by CH₃COOR (R: aliphatic hydrocarbon group, the carbon number is 1∼5), and toluenexylene.

11. The method of manufacturing an aluminum material for electrolytic capacitor electrodes as recited in any one of claims 5 to 8, wherein washing liquid for washing the aluminum material is water to which surfactant is added.

12. The method of manufacturing an aluminum material for electrolytic capacitor electrodes as recited in claim 11, wherein the surfactant is an anionic surfactant or a mixture of plural anionic surfactant selected from the group consisting of anionic surfactant (sulfate ester salt) represented by R-OSO₃Nₐ (R=saturated hydrocarbon group whose carbon number is 8∼18 or unsaturated hydrocarbon group having one double bond), anionic surfactant (sulfonic acid salt) represented by R-SO₃Na (R=saturated hydrocarbon radical whose carbon number is 8-18 or unsaturated hydrocarbon group having one double bond) or R-SO₃Na (R=saturated hydrocarbon radical whose alkyl radial has a carbon number of 8∼14 or unsaturated hydrocarbon group having one double bond), cationic surfactant (quaternary ammonium salt) represented by R-N⁺(CH₃)₃·Cl⁻ (R=saturated hydrocarbon group whose carbon number is 8∼16), polyethyleneglycol type nonionic surfactant represented by R-O-(-CH₂CH₂O)ₙH (R=saturated hydrocarbon group whose carbon number is 8∼16 or unsaturated hydrocarbon radical having one double bond, n=6∼14) or R-O-(-CH₂CH₂O)ₙH (R=saturated hydrocarbon group whose alkyl radial has a carbon number of 8∼12 or alkylphenyl radical which is unsaturated hydrocarbon group having one double bond, n=6∼14), a mixture of plural cationic surfactant, a mixture of plural nonionic surfactant, a mixture of one or more anionic surfactant and one or more nonionic surfactant, or a mixture of one or more cationic surfactant and one or more nonionic surfactant.

13. The method of manufacturing an aluminum material for electrolytic capacitor electrodes as recited in claim 7, wherein drying temperature after the washing is 200 °C or below.

14. The method of manufacturing an aluminum material for electrolytic capacitor electrodes as recited in claim 7 or 8, wherein drying temperature after the washing is 90 °C or below.

15. The method of manufacturing an aluminum material for electrolytic capacitor electrodes as recited in claim 1, wherein the aluminum material is washed with liquid capable of dissolving aluminum after the cold rolling, and then the contact heating step for heating the aluminum material with the heating body is performed after the final annealing.

16. The method of manufacturing an aluminum material for electrolytic capacitor electrodes as recited in claim 15, wherein the washing with the liquid capable of dissolving aluminum is alkali washing.

17. The method of manufacturing an aluminum material for electrolytic capacitor electrodes as recited in claim 15, wherein the washing with the liquid capable of dissolving aluminum is acid washing.

18. The method of manufacturing an aluminum material for electrolytic capacitor electrodes as recited in claim 15, wherein the washing with the liquid capable of dissolving aluminum is a sequence of alkali washing and acid washing.

19. The method of manufacturing an aluminum material for electrolytic capacitor electrodes as recited in any one of claims 15 to 18, wherein the aluminum material is subjected to organic solvent washing before the alkali washing or the acid washing.

20. The method of manufacturing an aluminum material for electrolytic capacitor electrodes as recited in any one of claims 16, 18 and 19, wherein alkali washing liquid for the alkali washing is solution containing one or more alkali selected from the group consisting of sodium hydroxide, potassium hydroxide, calcium hydroxide, sodium orthosilicate, sodium metasilicate, and sodium tertiary phosphate.

21. The method of manufacturing an aluminum material for electrolytic capacitor electrodes as recited in any one of claims 17 to 19, wherein acid washing liquid for the acid washing is solution containing one or more acid selected from the group consisting of hydrochloric acid, sulfic acid, nitric acid, and phosphoric acid.

22. The method of manufacturing an aluminum material for electrolytic capacitor electrodes as recited in claim 1, wherein the contact heating step for heating the aluminum material with the heating body is performed after the final annealing.

23. The method of manufacturing an aluminum material for electrolytic capacitor electrodes as recited in any one of claims 1 to 22, wherein a surface temperature of the heating body is 50 to 450 °C and a contact time of the aluminum member and the heating body is 0.001 to 60 seconds.

24. The method of manufacturing an aluminum material for electrolytic capacitor electrodes as recited in claim 23, wherein the surface temperature of the heating body is 60 to 400 °C.

25. The method of manufacturing an aluminum material for electrolytic capacitor electrodes as recited in claim 23, wherein the surface temperature of the heating body is 80 to 400 °C.

26. The method of manufacturing an aluminum material for electrolytic capacitor electrodes as recited in any one of claims 23 to 25, wherein the contact time of the aluminum member and the heating body is 0.001 to 60 seconds.

27. The method of manufacturing an aluminum material for electrolytic capacitor electrodes as recited in any one of claims 23 to 25, wherein the contact time of the aluminum member and the heating body is 0.001 to 30 seconds.

28. The method of manufacturing an aluminum material for electrolytic capacitor electrodes as recited in any one of claims 1 to 27, wherein an intermediate annealing is preformed during the cold rolling.

29. The method of manufacturing an aluminum material for electrolytic capacitor electrodes as recited in any one of claims 1 to 28, wherein the final annealing is performed in an inert gas atmosphere at the aluminum actual temperature of 450 to 600 °C.

30. The method of manufacturing an aluminum material for electrolytic capacitor electrodes as recited in any one of claims 1 to 29, wherein the heating body is a heating roll.

31. The method of manufacturing an aluminum material for electrolytic capacitor electrodes as recited in any one of claims 1 to 30, wherein the aluminum material is cooled after the contact with the heating body.

32. The method of manufacturing an aluminum material for electrolytic capacitor electrodes as recited in claim 31, wherein the cooling of the aluminum material is performed by bringing the aluminum material into contact with a cooling roll.

33. The method of manufacturing an aluminum material for electrolytic capacitor electrodes as recited in any one of claims 1 to 32, wherein the aluminum purity of the aluminum material is 99.9% or more.

34. An aluminum material for electrolytic capacitors manufactured by a method as recited by any one of claims 1 to 33.

35. The aluminum material for electrolytic capacitors as recited in claim 34 , the aluminum material is for middle voltage or high voltage.

36. A method of manufacturing an electrode material for electrolytic capacitors, wherein etching is subjected to the aluminum material manufactured by the method as recited in any one of claims 1 to 33.

37. The method of manufacturing an electrode material for electrolytic capacitors as recited in claim 36, wherein the etching is DC etching.

38. An aluminum electrolytic capacitor employing the aluminum electrode material manufactured by the method as recited in claim 36 or 37 as an electrode material.
